# EUROPEAN PATENT SPECIFICATION

(11) **EP 1 372 294 B1**
(45) Date of publication and mention of the grant of the patent: **12.10.2005**
(21) Application number: 02012488.9
(22) Date of filing: 12.06.2002
(51) Int. Cl.: H04L 12/14

(54) **A method for accounting cost for network content delivery**
Verfahren zur Kostenabrechnung zur Lieferung von Dateninhalte
Méthode de comptabilité des coûts de livraison de contenu d'un reseau

(43) Date of publication of application: 17.12.2003
(73) Proprietor: Stackwood, Stephen Richard, Lowestoft NR33 0NH (GB); Brooke, Adam Roy Harlow, 82335 Berg (DE)
(72) Inventor: Stackwood, Stephen Richard, Lowestoft NR33 0NH (GB); Brooke, Adam Roy Harlow, 82335 Berg (DE)
(74) Representative: HOFFMANN EITLE

(56) References cited:
- WO-A-00/57600
- WO-A-00/74430
- WO-A-01/30061

## Description

### FIELD OF THE INVENTION

The present invention generally relates to the telecommunications field and in particular to the field of billing of telecommunications services to enable telecommunications operators to sell data transfer capacity to third party content providers with whom they may not have a pre-arranged commercial billing and/or data provision agreement

Typically, a telecommunication network operated by a telecommunications operator comprises a billing apparatus for providing billing information for at least one data set residing at a content data provider to be provided to an end-user terminal through the telecommunication network. A tariffing information determining device for determining tariffing information from the telecommunications operator of said telecommunication network is provided within the billing apparatus, as will be explained with more details below. This billing apparatus or more specifically its tariffing information determining device is operable in connection with content data providers having a pre-arranged commercial agreement or content data providers having no pre-arranged commercial agreement with the telecommunications operator.

In the former case where all billing and charging for content delivery from a content data provider to an end-user terminal of a telecommunications operator is commercially pre-agreed, the billing apparatus or its tariffing information determining device uses a scheme for determining costs and/or determining tariffing information - i.e. a billing model - which is rather static as a result of technical limitations in the telecommunication network and/or the content data provider. Therefore, the billing model used by the billing apparatus for providing billing information does not allow for dynamic changes. Even if a pre-arranged billing arrangement exists between the content data provider and the telecommunications operator, there are disadvantages regarding the missing flexibility of the billing apparatus to adapt to dynamic changes of the billing model used.

The situation is even worse if no contractual billing pre-agreement exists between the content data provider and the telecommunications operator. In this case, the telecommunications operator has in principle two options. One option is simply to deny access of the content data provider's request for a switching of content data and this option is certainly not advantageous from an economic point of view (loss of revenue). The second option is to still allow the switching of the content data from the content data provider having no contractual pre-agreement and to monitor the volume of the switched content data. That is, in the second option the telecommunications operator has to charge for the content data on a volume charging basis, i.e. the billing apparatus of the telecommunications operator will provide billing information on the basis of the monitored content data provision. However, even in the second option the billing for content delivery is not dynamically negotiable between any telecommunications operator and any delivering party such as a content data provider and the subsequent end-user terminal (the requestor of the content).

Therefore, the present invention addresses the problem of how to provide billing information about the charges, which will incur for the provision of a data set from the data content provider to said end-user terminal without the necessity of any contractual pre-agreement between the content data provider and the telecommunications operator, also allowing a dynamic negotiation of charges between the telecommunications operator and the content data provider.

### BACKGROUND OF THE INVENTION

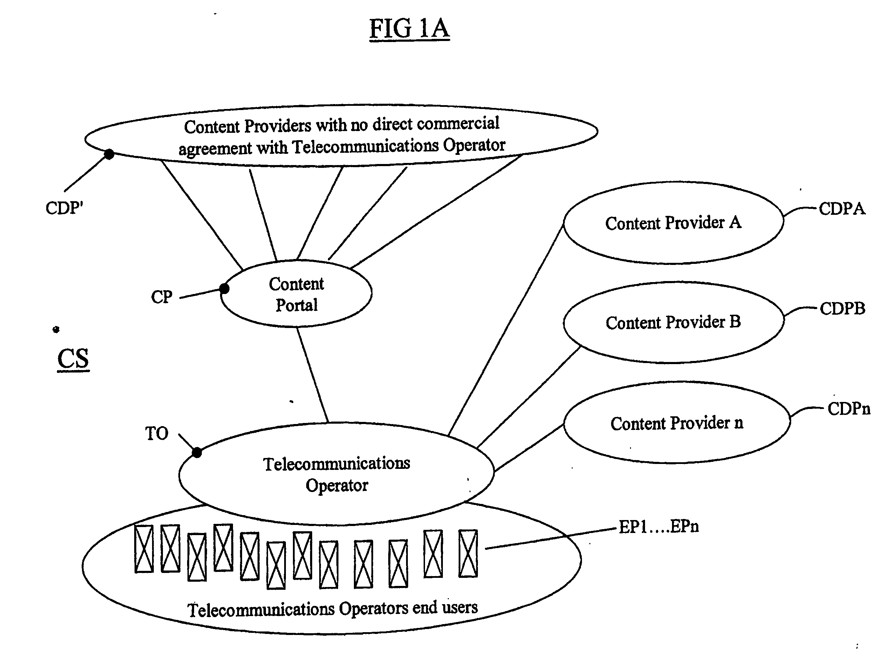

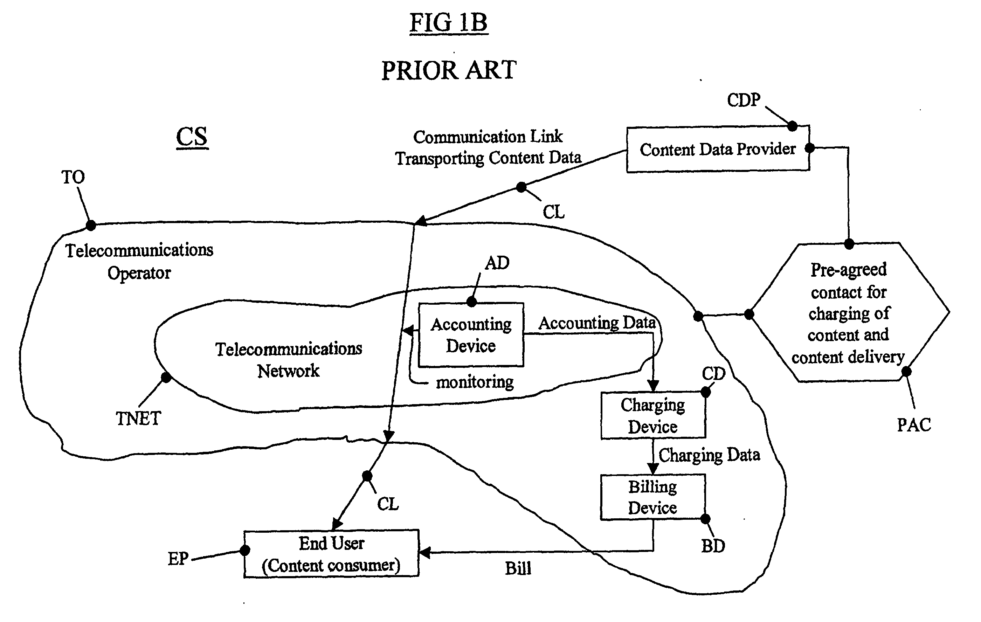

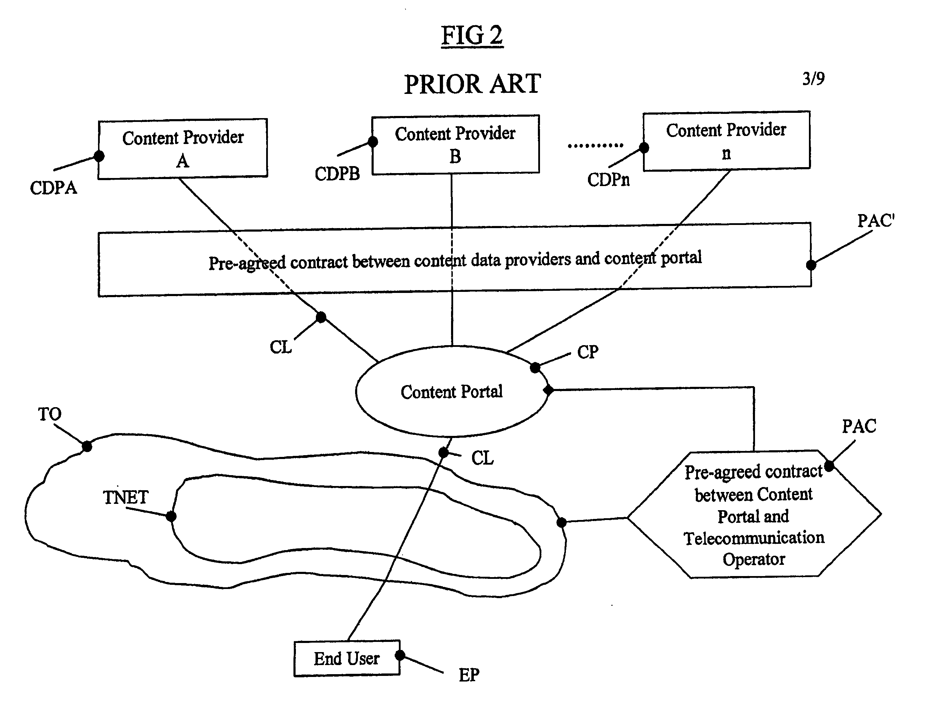

Fig. 1a shows a general overview of a communication system CS in accordance with the prior art, showing in particular the interconnection or communication between a plurality of entities, relevant for understanding the background of the invention. Fig. 1b shows more details of the communication system CS shown in Fig. 1a, in particular the manner in which billing information can be provided in connection with a pre-agreed arrangement PAC between a content data provider CDP and a telecommunications operator TO. Fig. 2 shows another way of billing for telecommunications services in accordance with the prior art.

As schematically shown in Fig. 1a, a plurality of content data providers CDPA, CDPB, CDPn communicate with a telecommunications operator TO in order to route their content data to individual end-user terminals EP1...EPm operated by the end-users which are using the telecommunications operator's telecommunications services for example subscribers and roaming end users. Typically, content providers CDPA, CDPB, CDPn are considered to have a pre-agreed commercial arrangement with the telecommunications operator TO regarding the collection and provision of billing information.

In Fig. 1a there is also shown with reference numeral CDP' one or more content data providers which may not have a direct commercial agreement with the telecommunications operator TO. Typically, such content data providers CDP' are connected through a content portal CP to the telecommunications operator TO. In the configuration of the communication system CS in Fig. 1a the content data providers CDPA, CDPB, CDPn, CDP' provide content data as individual data sets through the switching facilities of the telecommunications operator TO to one or more end-user terminals EP1...EPm as discussed with more details in Fig. 1b and Fig. 2. The telecommunications operator TO, or in particular the telecommunication network TNET, comprises facilities to collect billing information about this content data provision.

As shown in Fig. 1b, a content data provider CDP is typically connected through a communication link CL to the telecommunication network TNET operated by a particular telecommunications operator TO. Although not shown in Fig. 1b, of course the communication within the telecommunication network TNET is provided through the switching facilities including for example data routers/switches/servers (in the case of a fixed network) or a mobile switching center/home location registers/data routers/switches/servers and a cellular access network (in case of a mobile communication system). The communication link is connected to an accounting device AD, which is connected to a charging device CD and to the end-user terminal EP. Although not shown in Fig. 1b, the content data provider CDP provides content data in terms of data sets to the end-user terminal EP in response to a content data request issued by the end-user terminal EP. The charging device CD is connected to a billing device BD.

Fig. 1b also shows with reference numeral PAC that the content data provider CDP has a pre-agreed commercial agreement with the telecommunications operator TO for charging of content and content delivery. That is, there is a pre-agreed commercial agreement for charging of content and content delivery between content data providers CDP and the telecommunications operator TO in the prior art in order to charge an end-user (content consumer). The telecommunications operator TO routes the content data through its telecommunication network TNET via the communication link CL.

The accounting device AD monitors the data stream consisting of the requested data sets. This monitoring process may result in accounting data, which is output by the accounting device AD to the charging device CD. Thus, the charging device CD, on the basis of the accounting data, provides charging data to the billing device BD, which is to send the final bill to the end-user or the end-user terminal, respectively. Therefore, it is the telecommunications operator who is to send a bill to the end-user for charging him on the basis of the requested content and the process of content delivery. Additionally, the telecommunications operator TO has to fulfil the conditions of the pre-agreed commercial agreement for charging of content and content delivery, e.g. for transferring money for the content to the content data provider and charging the content data provider for content delivery through the telecommunication network TNET, on the basis of the terms of the pre-agreed commercial agreement PAC. The end user may also be charged directly by the content data provider independantly of the end users relationship with the telecommunications operator.

Although the pre-agreed commercial agreement PAC will ensure that for example the content data provider is charged for the content delivery through the telecommunication network TNET, the accounting data, charging data and also the bill containing the billing information are based on the accounting device's functionality in monitoring the content data provision. Typically, as explained above, the conventional accounting device AD only comprises, in the case of content delivery from a content data provider that may not have a pre-agreed commercial agreement with the telecomunications operator, a volume-determining device, which is adapted to determine the data volume of the content data provision. That is, the accounting data and also the final bill will only be reflecting the volume of the provided data set.

When the charging device CD finally determines the charges (charging data) on the basis of the accounting data, also a tariffing information (not shown in Fig. 1b) from the telecommunications operator TO of said telecommunication network TNET is involved. The tariffing information indicates for example how much the telecommunications operator TO intends to charge for a certain amount of data or the time of day specific costs for the seizure of data transport cpacity. This tariffing information will be needed by the accounting device AD and/or the charging device CD and/or the billing device BD for finally determining the billing information which is provided to the end-user terminal EP, for example as a conventional or electronic bill.

Fig. 2 shows another way for billing of telecommunication services in accordance with the prior art. Instead of being individually connected to the telecommunication network TNET by a respective separate communication link CL a plurality of content data providers CDPA, CDPB, CDPn are connected to a content portal CP. The content portal CP collects the content data streams from the plurality of content data providers CDPA, CDPB...CDPn and routes this data to the telecommunication network TNET wherein the owner of the content portal CP is not necessarily the owner of the telecommunication network TNET. As a result, there has to be a pre-agreed commercial agreement between the plurality of content data providers CDPA, CDPB, CDPn and between the content portal CDP, as indicated schematically with the reference numeral PAC'. In addition, there has to be a pre-agreed commercial agreement regarding billing, indicated with reference numeral PAC in Fig. 2, between the content portal CP and the telecommunications operator TO in order to organize the billing and charging of the content data streams.

Whilst in Fig. 2 there is no direct commercial agreement between the telecommunications operator TO and the content data providers CDPA, CDPB, CDPn, similarly as CDP' in Fig. 1a, still there has to be a pre-agreed commercial agreement PAC between the content portal CP and the telecommunications operator TO.

As can be understood from the above discussion of in particular Fig. 1b and Fig. 2, when no contractual agreement exists either between the actual content data provider and the telecommunications operator or at least between the content portal CP and the telecommunications operator TO, the telecommunications operator either cannot offer access to content or is limited to charge for that content merely on a volume charging basis. The availability and provision of content is therefore restricted with the availability of billing controls on the basis of contractual pre-agreements between the different parties. On the other hand, it is desirable that the billing for content delivery is dynamically negotiable between any telecommunications operator and any delivering party and the final end-user or end-user terminal, respectively. However, as can be derived from the configurations in Fig. 1b and Fig. 2, the billing for the content delivery is not dynamically negotiable between any telecommunications operator and any delivering party, for example a content data provider, and the subsequent end-user terminal constituting the requestor of the content. That is, even if there is a pre-agreed commercial agreement PAC, PAC', the terms of this contract will be quite static and cannot dynamically be negotiated between the participating parties. For example, there is no possibility that the content data provider CDP or the end-user terminal EP can, before requesting the data and providing the data, negotiate with the billing facilities certain terms and costs of the individual data contents provision.

For example, the end-user terminal EP might place a request to the content data provider CDP for downloading a picture, i.e. image data, from a web page shown on the end-user terminal's screen. Of course, the picture data has a certain volume and it might constitute a certain value itself for the content data provider CDP. However, the end-user terminal EP has no possibility to know the costs for downloading the picture data before the actual data has actually arrived at his/her end-user terminal EP because the accounting, charging and billing is only performed on the actual routing of the content data through the telecommunication network TNET routing facilities. That is, the billing in accordance with the pre-agreed commercial agreement PAC is only performed after the whole action has already taken place.

Thus, the end-user terminal EP or the end-user, respectively, has no option to negotiate with the content data provider CDP and/or the telecommunications operator TO what costs will actually incur before the actual delivery has taken place. Thus, the end-user can only estimate the costs, for example on the basis of the expected volume of the data. However, he can neither negotiate with the other units nor can he/she dynamically change the prearranged contract PAC.

### SUMMARY OF THE INVENTION

As explained above, even when pre-agreed commercial agreements PAC, PAC' exist between the individual units participating in the content data delivery, such type of pre-agreed commercial arrangement is static and does not allow for a real-time flexible negotiation and configuration of the billing when actually requesting data from the content data provider. If pre-agreed commercial agreements are not established with the content data providers, the telecommunications operator either does not allow an access or has to charge for the content merely on a volume-charging basis. Thus, the conventional billing techniques are disadvantageous because of its inability to provide an accurate and flexible billing, in particular in cases where no relationship (contractual or otherwise) exists between the telecommunications operator and the content data provider for the requested content.

The invention in particular aims at providing a billing apparatus, a billing method and a content data provision control system, which overcome the aforementioned disadvantages.

More specifically, the object of the present invention is to provide a billing apparatus, a billing method and a content data provision control system which allow an accurate and flexible billing for content data delivery, in particular for cases where no pre-agreed commercial arrangements are present between the telecommunications operator and the content data provider.

This object is solved by a billing apparatus (claim 1) for providing billing information for at least one data set residing at a content data provider to be provided to an end user terminal through a telecommunication network, comprising a tariffing information determining device for determining tariffing information from the telecommunications operator of said telecommunication network and a data set characteristics information determining device for determining for said at least one data set characteristics information from said content data provider; a calculating device for calculating said billing information on the basis of at least said tariffing information from the telecommunications operator and said characteristics information of said at least one data set from the content data provider; an outputting device for outputting said calculated billing information.

Furthermore, this object is solved by a billing method (claim 10) for providing billing information for at least one data set residing at a content data provider to be provided to an end user terminal through a telecommunication network, using a billing apparatus, comprising the following steps: providing tariffing information by the telecommunications operator of said telecommunication network; and providing for said at least one data set characteristics information by said content data provider; calculating said billing information at least from said tariffing information from the telecommunications operator and said characteristics information provided by said content data provider; and outputting of said billing information.

Furthermore, the object is solved by a content data provision control system (claim 21) for controlling content data delivery to end user terminals, comprising a billing apparatus as defined above, a content data provider including a data set storage device adapted to store data sets to be provided to said end user terminals, and one or more end user terminals, wherein said outputting device is adapted to output said billing information to said end user terminal, via said content data provider, before said content data provider provides said data set to said end user terminal in response to a data set request message issued by an end user terminal.

The apparatus, method and data provision control system in accordance with the invention determine characteristics information for the requested data set to be provided from the content data provider and the billing information is calculated from tariffing information from the telecommunications operator and the characteristics information. An outputting device outputs this calculated billing information. That is, in accordance with the invention there is an independent determination of the actual characteristics of the requested data set in order to determine - before the actual content data delivery and without the need of any contractual agreements between content data providers and telecommunications operators participating in the content data delivery - billing information by processing the tariffing information from the telecommunications operator and the characteristics information from the content data provider. Such type of billing technique is completely flexible and dynamic because the content data provider can for example flexibly and dynamically influence characteristics information of the data sets to be provided to any end-user terminal and thus the billing information can dynamically change - also over time - without any contractual revision. Thus, the actual characteristics of the data set to be provided can be included flexibly before the delivery time.

### FURTHER ADVANTAGEOUS EMBODIMENTS

Preferably (claim 2), said outputting device comprises a charging amount information communicating device which is connected at least to said content data provider via an information link, for communicating said calculated billing information at least to said content data provider.

Preferably (claim 3), an information communicating device is provided, which is connected at least to said telecommunications operator via an information link, for communicating said calculated billing information at least to said telecommunications operator.

Preferably (claim 4), said outputting device comprises a bill-sending device adapted to send a bill to said telecommunications operator on the basis of said billing information.

Preferably (claim 5), an authentication information determining device adapted to exchange authentication information data with one or more of said content data provider, said telecommunications operator and said end user terminal. This device also protects for example the telecommunications operator's end users and the content data provider against unauthorized use of their resources.

Preferably (claim 6), a data set provision monitoring device is adapted to monitor a data set provision from the content data provider to the end user terminal via said telecommunication network.

Preferably (claim 7), said data set provision monitoring device comprises a volume determining device adapted to determine the data volume of said data set provision; and/or a timing device adapted to determine the elapsed time and/or time of day for the provision of said data set from said content data provider to said end user terminal via said telecommunication network.

Preferably (claim 8), a storage device is adapted to store characteristics information of data sets as determined by said data set characteristics information determining device or tariffing information from said telecommunications operator. This storage device is also advantageous because it is able to buffer pieces of information which come from different parties of the systems at different times.

Preferably (claim 9), said characteristics information is one or more of the data volume of said data set, the time-of-day of providing said data set to said end user terminal, the content type of said data set, the type of configuration of said end user terminal to which said data set is provided, the type of content data provider and the bit rate of data transmission of said data set provision.

Further preferably (claim 18), the method comprises the steps of sending from said end user terminal a data set request message to said data content provider, said data set request message indicating said data set to be transferred to said end user terminal; wherein said content data provider provides said requested data set to said end user terminal in response to said request message; and wherein said billing information is provided to said requesting end user terminal before said data set is provided to said end user terminal.

Further preferably (claim 19), the method comprises the steps of sending a billing acceptance message from said requesting end user terminal to the billing apparatus via said content data provider, said billing acceptance message indicating the acceptance of charges as indicated by said billing information, in response to said provision of said billing information to said requesting end user terminal, wherein said billing acceptance message is sent before said requested data set is provided to said requesting end user terminal by said content data provider.

Further preferably (claim 20), the method comprises the steps of sending a transportation confirmation message from said telecommunications operator to the billing apparatus, said transportation confirmation message indicating the confirmation of said telecommunications operator to transport said data set, in response to the provision of said billing information to said telecommunications operator, wherein said confirmation message is sent before said data set is provided to said requesting end user terminal.

Further advantageous embodiments and improvements of the invention can be taken from the dependent claims. Hereinafter, advantageous embodiments of the invention are illustrated with reference to the drawings.

However, it should be noted that the invention also comprises other embodiments comprising features and/or steps, which have been described and/or shown separately in the claims, the description and the drawings. Therefore, what is described below should only be taken as preferred embodiments of the invention and the invention should not be construed to be limited to these embodiments.

### BRIEF DESCRIPTION OF THE DRAWINGS

In the drawings, the same or similar reference numerals denote the same features and/or steps throughout.
- Fig. 1a: shows a schematic overview of communication system CS for providing content data from content data providers CDPA, CDPB, CDPn, CDP' to end-user terminals EP1...EPm, in accordance with the prior art;
- Fig. 1b: shows an overview of a communication system CS of Fig. 1a with more details, in particular the content data provision and billing if a pre-agreed commercial agreement PAC exists between the telecommunications operator TO and the content data provider CDP, in accordance with the prior art;
- Fig. 2: shows a communication system CS in accordance with the prior art, showing in particular the content data provision through a content portal CP when no pre-agreed commercial agreement exists between the telecommunications operator TO and the content data providers CDPA, CDPB, CDPn;
- Fig. 3: shows a principle overview of a content data provision control system SYS in accordance with the principle of the invention;
- Fig. 4: shows an embodiment of the billing apparatus BA in accordance with the invention, showing in particular the interconnections between the content data provider CDP' nd the telecommunications operator TO and the end-user terminal EP;
- Fig. 5: shows a flowchart of the billing method in accordance with the invention; and
- Fig. 6a, 6b, 6c: shows flowcharts of communication messages exchange between the content data provider CDP', the billing apparatus BA, the telecommunications operator TO and the end-user terminal EP, in accordance with preferred modes of the invention;

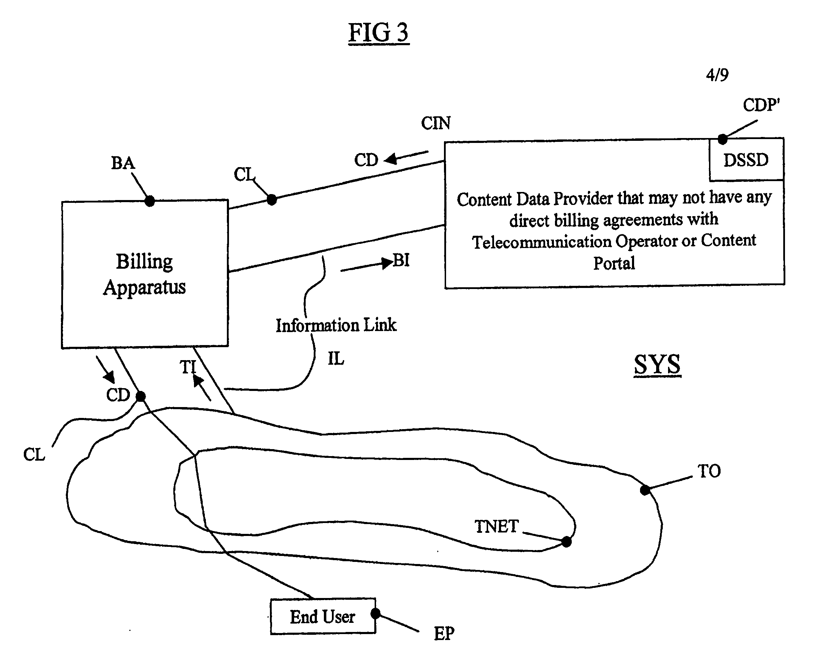

Hereinafter, a detailed description of the invention is made. First, the principle of the invention is described with reference to Fig. 3.

### PRINCIPLE OF THE INVENTION

Fig. 3 shows an overview of a content data provision control system SYS in accordance with the invention. The content data provision control system SYS is configured to provide content data CD to end-user terminals EP, more particularly to control or permit/disallow content data CD delivery to end-user terminals EP. The content data provision control system SYS comprises a billing apparatus BA in accordance with the invention, a content data provider CDP' including a data set storage device DSSD adapted to store data sets to be provided to said end-user terminals EP, and one or more end-user terminals EP, one of which is shown at the bottom of Fig. 3. The content data provider CDP' is connected to the billing apparatus BA through a communication link CL, as already generally explained with reference to Fig. 1b. Furthermore, the content data provider CDP' is connected with the billing apparatus BA through an information link IL. The same connections CL, IL are also provided between the billing apparatus BA in accordance with the invention and the telecommunications operator TO, more specifically through the telecommunication network TNET operated by the telecommunications operator TO to the end-user terminal EP.

As shown in Fig. 3, the content data provider CDP' is assumed to be of a type that may not have a direct billing agreements with the telecommunications operator TO or a content portal CP, as in the case of Fig. 1b and Fig. 2.

As already explained with reference to Fig. 1b, typically, the end-user terminal EP comprises a request means for issuing a request message to the content data provider CDP' through the telecommunication network TNET for requesting the provisions of a data set from the content data provider CDP'. For example, such a data set request message means (not explicitly shown in Fig. 3) can be the running of a web browser and the typing of a request for downloading a particular page from an internet data provider. Furthermore, although in Fig. 3 the data set storing device DSSD is shown to be part of the content data provider CDP', it should be understood that the data set storage device DSSD can also be provided separately from the content data provider CDP', e.g. it can be a separate storage device located elsewhere in a content data provider network, e.g. a server network of interconnected content data providers.

Typically, the end-user terminal EP can be a mobile telephone, a laptop computer, a PC, an internet telephone, or any other device with which conventionally content data can be provided from a content data provider through a telecommunication network.

Typically, the content data provider CDP' can be an internet provider, a server network, an intranet or the internet. A skilled person can think of various other possibilities for the end-user terminal EP and the content data provider CDP'.

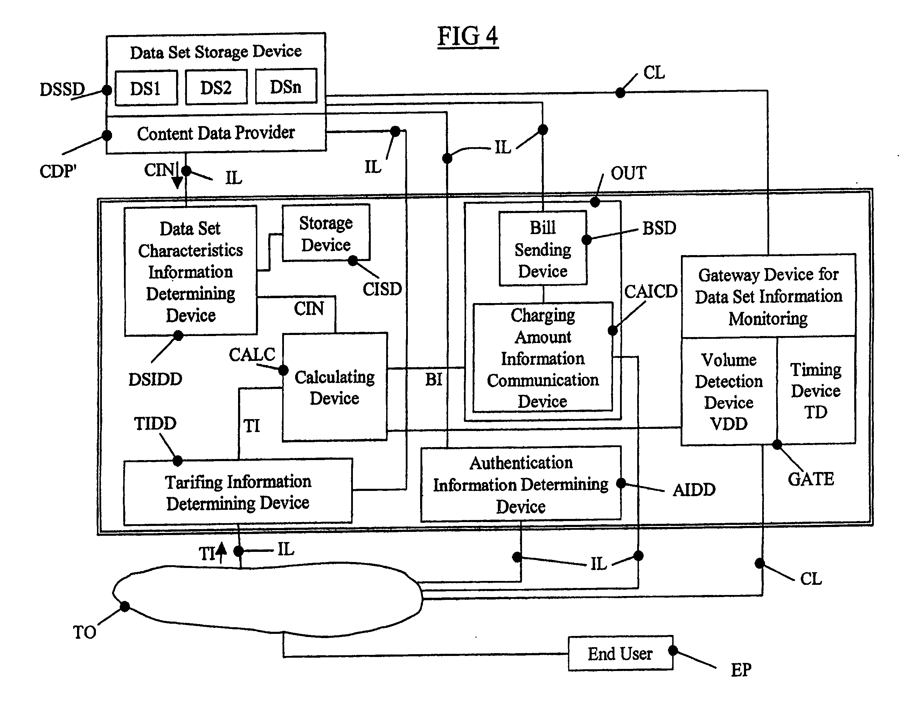

The embodiment of the billing apparatus BA, schematically shown in Fig. 3, is shown in Fig. 4. However, it should be understood that the billing apparatus BA, although to be located outside of the telecommunications operator TO, could also be part of the telecommunication network TNET. Furthermore, of course, in accordance with other embodiments of the invention, it is also possible that the content data provision system SYS in Fig. 3 uses pre-agreed commercial arrangements such as PAC, PAC' as shown in Fig. 1b, Fig. 2, in addition to the core features/steps of the invention.

It should be noted that in the principle of the invention in Fig. 3, the billing apparatus BA only communicates with the telecommunications operator TO and the content data provider CDP' in order to provide billing information for at least one data set DS1, DS2, ... DSn (see Fig. 4) residing at the content data provider CDP' to be provided to the end-user terminal EP through the telecommunication network TNET.

Thus, the content data provision control system SYS, shown in Fig. 3, is adapted to control, i.e. permit or prevent a content data delivery to end user terminals EP. It comprises a billing apparatus BA as defined above, a content data provider CDP' including a data set storage device DSSD adapted to store data sets to be provided to said end user terminals EP, and one or more of said end user terminals EP. The billing apparatus BA also includes an outputting device OUT (to be described with more details in Fig. 4) which is adapted to output said billing information BI to said end user terminal EP, via said content data provider CDP', before said content data provider CDP' provides said data set to said end user terminal EP in response to a data set request message issued by an end user terminal EP.

The system SYS, shown in Fig. 3, controls, i.e. permits/prevents a content data delivery of content data CD from the content data provider CDP' to the end-user terminal EP. For example, if the characteristics of the data set to be delivered for a specific user (who has e.g. requested the delivery of a specific data set through sending of a request to the content data provider) are not within the thresholds of those negotiated, the billing apparatus can prohibit the data set delivery to the telecommunications operator TO and ultimately to the end-user terminal EP who is authenticated and has requested the delivery.

As will also be explained below, the delivery of content data can for example also depend on whether or not the user or user-terminal confirms, before the actual data is delivered, that the charges which will incur are acceptable to the user or user-terminal. This is done through the transmitting of a billing acceptance message from the user-terminal EP to the content data provider CDP' in response to the receipt of the billing information BI.

Also other criteria can be used for the control to permit/prevent the actual provision of the data set, after the billing information has been determined (and accepted by the user). Such other criteria are used in a gateway device GATE as shown in Fig. 4 and explained below.

### EMBODIMENT OF THE BILLING APPARATUS

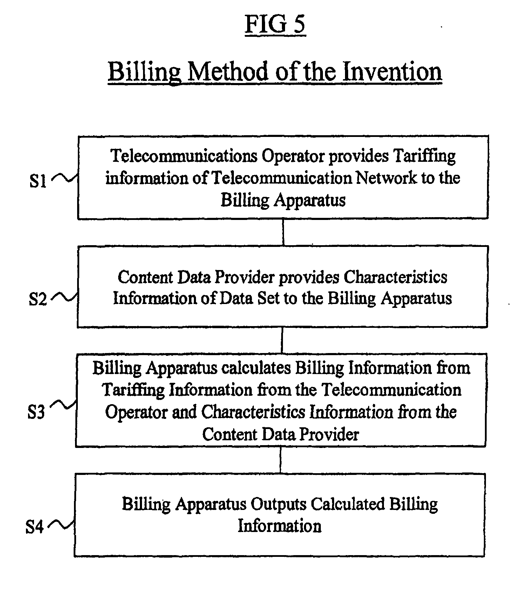

Fig. 4 shows a billing apparatus BA including a tariffing information determining device TIDD, a data set characteristics information determining device DSIDD, a calculating device CALC and an outputting device OUT for carrying out the method of the invention as shown in the flowchart of Fig. 5.

As already partially explained with reference to Fig. 3, the content data provider CDP' shown in Fig. 4 comprises a data set storage device DSSD for storing at least one data set DS1, DS2, ..., DSn to be provided to the end-user terminal EP in response to a data set request message transmitted from the end-user terminal EP. As shown in Fig. 4, the content data provider CDP' is connected to the data set characteristics information determining device DSIDD through an information link IL and is connected through another information link IL to the tariffing information determining device TIDD. The calculating device CALC is connected to the data set characteristics information determining device DSIDD and the tariffing information determining device TIDD. The calculation device CALC is connected to an outputting device OUT via a billing information link which outputs the calculated billing information to the content data provider CDP' and/or the telecommunications operator TO through a respective information link IL.

An example of the data set characteristic information determining device DSIDD, the tariffing information determining device TIDD and the calculating device CALC is a microprocessor, a minicomputer, a personal computer, a server, a workstation or a mainframe. The devices DSIDD, TIDD and CALC can be provided separately or together in one of the aforementioned processing devices.

An example for the information link IL is a fixed transmission line or trunk or an internet based virtual private network and an example of the communication line CL is a transmission line and/or a radio link.

As once more shown in Fig. 4, the billing apparatus BA is arranged at an intermediate position between the content data provider CDP' and the telecommunications operator TO, as already shown and explained with reference to Fig. 3. However, in accordance with another embodiment of the invention, the billing apparatus BA may also be provided wholly or partly within the telecommunications operator area TO or within the telecommunication network TNET. In another embodiment of the invention the billing apparatus BA may be provided by or in one of the switching facilities of the telecommunication network TNET.

An example of the telecommunication network TNET is a fixed network, a mobile radio communication network, a packet switched network or any other combination of the aforementioned networks.

As shown in Fig. 5, in a first step S1 of the method for providing billing information for at least one data set DS1, DS2, ... DSn residing at a content data provider CDP', the telecommunications operator TO provides tariffing information TI to the billing apparatus BA, more precisely to the tariffing information determining device TIDD. That is, in step S1, the tariffing information determining device TIDD determines tariffing information TI from the telecommunications operator TO of the telecommunication network TNET, which is provided through the information link IL as shown in Fig. 4.

As well known to the skilled person, a telecommunications operator TO has a licence to provide services to the end-user through a telecommunication network TNET. It is the operator who decides the tariff of charging these services and such tariffing information TI may be stored in a database or memory somewhere in devices of the telecommunication network TNET, for example in an exchange, or in a home location register. It is also possible that such tariffing information TI is stored individually for each user such that the billing apparatus BA can determine the actual billing information BI for a data set requested on a user-specific basis, though usage of a user-specific tariffing information TI. Thus, the tariffing information TI may be read out from a memory to the billing apparatus. However, it is also possible that the operator TO sends a message to the billing apparatus BA or that the operator TO merely informs the billing apparatus BA in writing about the tariff to be applied. It is also possible that the billing apparatus autonomously access a predefined memory of the operator and/or the telecommunications network TNET which stores this tariffing information TI.

An example of the tariffing information TI is as follows. The tariffing information TI for example indicates the tariff of providing any kind of content data to the end user EP from the content data provider CDP' through the telecommunication network TNET. The tariffing information, in accordance with several embodiments of the invention, may be based upon the time of day, a data transfer volume, committed information rate (CIR), peak information rate (PIR), or any combination of the above. Of course, the aforementioned list is not limited and further tariffing information TI can be devised by the skilled person. Using XML is another example for the provision of the tariffing information. In accordance with another embodiment of the invention, the telecommunications operator TO will have an access to adjust the "menu of prices" per contractual agreement already set up with the billing apparatus. Thus, the tariffing information TI essentially represents parameters indicating to the billing apparatus BA the charging tariff technique.

In step S2, the data set characteristics information determining device DSIDD determines for said at least one data set DS requested by the end user terminal EP (for example in a content data set request message) characteristics information from the content data provider CDP'. One example is that the content data provider CDP' provides the characteristics information of the requested data set to the data set characteristics information determining device DSIDD after having determined characteristics information for the requested data set itself. In this case, of course, the content data provider CDP' always knows the one or more data sets which should be provided to the end user terminal EP and therefore it is preferable if the content data provider CDP' itself performs a determining of the characteristics information for the one or more requested data sets.

However, alternatively, in accordance with another embodiment of the invention, it is also conceivable that the content data provider CDP' provides a copy of the requested data set DS1, DS2, ... DSn to the data set characteristics information determining device DSIDD of the billing apparatus BA which will then determine the characteristics information on the basis of the indicated or transferred data set.

An example of the characteristics information of interest is the data volume of the data set and/or the time-of-day of providing or requesting the data set to/from said end user terminal EP and/or the content-type of said data set and/or the type of configuration of the end user terminal EP to which said data set is provided and/or the type of content data provider and/or the bit rate of data transmission of said data set provision.

Although it has been described above that the content data provider in step S2 only provides characteristics information for the one or more data sets requested by the end user terminal in the data set request message, it is also possible, in accordance with another embodiment of the invention that the content data provider CDP' independent from a request supplies to the data set characteristics information determining device DSIDD a plurality of characteristic information sets for one or more of the data sets DS1, DS2, ... DSn stored in its data set storage device DSSD. This means that the calculating device, to be described below, can calculate the requested billing information BI even before the provision of the actual data set DS is requested by the end user terminal EP. This illustrates once more the autonomous and independent communication of the billing apparatus BA with the content data provider CDP' in order to determine billing information dynamically, at any time and independent of any pre-agreed commercial agreements (although they may be used in addition to the inventive procedures).

In step S3, the calculating device CALC receives the characteristics information CIN and the tariffing information TI respectively from the data set characteristics information determining device DSIDD and the tariffing information determining device TIDD. The calculating device CALC is adapted to calculate the billing information BI on the basis of at least said tariffing information TI from the telecommunications operator TO and said characteristics information CIN of said at least one data set from the content data provider CDP'.

One example of the calculation function carried out by the calculating device CALC should highlight how the calculating device CALC calculates the billing information BI. Assume that an end user terminal EP has requested - through issuing a content data set request message to the content data provider CDP' - the provision of a data set having a content-type of "evening news" at a provision time-of-day of "8 pm". The content data provider CDP', receiving a request message for such a data set to be provided at the requested provision time, determines as characteristics information "content-type of data set = evening news" and "provision time-of-day = 8 pm". This type of characteristics information is processed by the calculating device CALC together with the tariffing information TI provided from the telecommunications operator TO. For example, the telecommunications operator can provide a tariffing list which shows that data sets having a content-type of "evening news" are charged with different rates depending on the time of day. For example, the tariffing list may indicate that data sets of the type "evening news" to be delivered at "8 pm" are to be charged at a very high rate since the telecommunications operator TO can assume that most people would wish to watch "evening news" shortly after they return home from work around "8 pm". Thus, the billing information BI represents the actual charges in a dynamic manner and it also does so even before the actual data set is provided to the end user terminal EP through the telecommunication network TNET.

In Step S4, in Fig. 5 the calculating device CALC has transferred the billing information BI to the output device OUT which outputs the calculated billing information BI to the content data provider CDP' and/or the telecommunications operator TO and/or the end user terminal EP.

In accordance with one embodiment of the invention the outputting device OUT comprises a charging amount information communicating device CAICD which is connected at least to said content data provider CDP' via an information link IL for communicating said calculated billing information BI at least to said content data provider CDP'. In accordance with another embodiment of the invention, said outputting device OUT may comprise a charging amount information communication device CAID which is connected at least to said telecommunications operator TO via an information link IL, for communicating said calculated billing information BI at least to said telecommunications operator TO.

Based on the above explanation of the core features and steps of the invention and further examples and embodiments, it should now be understood that the invention provides an extremely flexible and non-static, i.e. dynamic, way how to provide billing information BI in the content data provision system SYS shown in Fig. 3. That is, the billing apparatus BA allows end users to be billed based upon content for content delivery where no relationship (contractual or otherwise) exists between the telecommunications operator TO and the content data provider CDP' for that content. For example, the billing apparatus BA can receive dynamically changing tariffing information TI from the telecommunications operator TO and also the characteristics information coming from the content data provider CDP' is dynamic, for example dependent on the type of requested data set. It should also be noted that all this can take place before the actual provision of the content data from the content data provider CDP' to the end user terminal EP.

As clearly apparent from Fig. 4, there is also no need for a pre-agreed commercial agreement between the content data provider CDP' and end user terminal EP.

Furthermore, the provision of billing information to the content data provider in a format that is recognizable by the content data provider for content that is not currently billable (other than a volume base charging model) delivered to the telecommunications operator is possible. There is also the possibility to provide billing information to the telecommunications operator in a format that is recognizable by the telecommunications operator for content data that is not currently offered by content data providers.

Furthermore, an unknown anonymity of the end user or end user terminal is possible (to the content data provider). The content data provider that provides the content data can be transparent to the telecommunications operator and the telecommunications operator can influence resource utilization using tariffing. For example, it is also possible that the end user terminal EP, when receiving the billing information BI from the outputting device OUT, via the content data provider, decides that the currently indicated charges of the billing information BI are too high for the desired content data provision and it might send a reject message that the content data is not to be provided currently and is for example to be provided at an alternative time. Thus, the end-user and the telecommunications operator can negotiate the usage of the resources of the telecommunication network TNET.

Another advantage is that the content data provider is delivered a real-time notification of the telecommunications operator authorization of charge request.

Summarizing, since the content data provider CDP' always provides the characteristics information of the requested data set or data sets and since the telecommunications operator TO always provides the tariffing information TI, also in a dynamic manner (for example changing in time), the billing apparatus BA is capable of providing billing information BI which is flexibly dependent on the data set characteristics of the data set to be provided and the tariffing information which indicates the telecommunications operator charging scheme. All this can take place completely autonomously, i.e. before the data content provider CDP' provides the data set to said end user terminal in response to the data set request message issued by the end user terminal EP.

It should also be noted that the invention described with reference to the core steps in Fig. 5 the core units in Fig. 4 is equally well applicable to the billing of Internet Service Provider (ISP) services to end user terminals.

A further example should highlight the advantages of the invention. For example, it should be assumed that the end user terminal EP requests the provision of a particular image data set, i.e. a picture, from the content data provider CDP'. In accordance with the prior art, either the content data provision is charged in accordance with the volume through put through the telecommunication network TNET or on the basis of a fixed and pre-arranged contractual agreement.

In accordance with the invention, the end user or end user terminal EP can be provided with billing information indicating the charges for example based on the content-type (characteristics information), the time-of-day for the provision of this data set (characteristics information) and/or the bit rate of data transmission through the telecommunication network. The telecommunications operator TO may indicate that certain type of audio data may be charged at a certain time per day at a particular rate and the calculating device CALC can correlate the characteristics information with this type of tariffing information to provide an accurate and flexible billing information BI which will be provided to the end user terminal EP before the content data provider CDP' actually provides the audio data to the end user terminal EP.

Thus, the end user terminal EP is capable of even rejecting the provision of the audio data with a reject message issued to the content data provider if the indicated charges are too high. Thus, the end user or end user terminal EP can place another request for the data set provision at another time of day, for example by night, because most likely the telecommunications operator TO will have a lower charging rate (tariffing information) for content data routing by night. Thus, a dynamic process can be set up to negotiate the appropriate charge which will be acceptable by the end user terminal EP for having the data set (audio data) provided. This once more illustrates the flexible and dynamic nature of the inventive billing technique.

### FURTHER ADAVANTAGEOUS EMBODIMENTS OF THE INVENTION

In accordance with another embodiment of the invention, the outputting device OUT comprises a bill sending device BSD adapted to send a bill to said telecommunications operator TO on the basis of said billing information BI. Thus, immediately after receiving the billing information BI from the calculating device CALC, the outputting device OUT can send a bill indicating the billing information BI to the telecommunications operator TO.

The outputting device OUT, in accordance with another embodiment of the invention may also be adapted to output said billing information BI to said end user terminal EP, for example through said content data provide CDP'. In this case, the outputting device OUT uses the information link IL to the content data provider CDP', as shown in Fig. 4, in order to provide the billing information BI first to the content data provider CDP'. The content data provider CDP' can then decide, for example on the basis of a transmitted request message, whether or not billing information BI is to be provided to said end user terminal EP.

It is also possible that the outputting device OUT outputs the billing information BI to said end user terminal EP via the telecommunications operator TO. Thus, despite the fact that the billing information BI is provided from the telecommunications operator TO to the end user terminal EP, the end user terminal EP can send further messages to the content data provider CDP' in order to put different request options, e.g. for example to change the time of day at which the content data provision is requested. The telecommunications operator TO will in such a case provide an amended billing information BI to said user terminal EP.

It is also possible, in accordance with another embodiment of the invention, that the bill is prepared on the basis of the billing information BI and said bill is provided to said telecommunications operator TO.

As also shown in Fig. 4, the billing apparatus BA can comprise an authentication information determining device AIDD which is adapted to exchange authentication information data with one or more of said content data provider CDP', said telecommunications operator TO and said end user terminal EP. For this purpose the authentication information determining device AIDD is connected to the content data provider CDP' and/or the telecommunications operator TO. That is, the invention also provides technical interfaces and authentication controls to allow for the dynamically controlled billing and charging of delivery of telecommunication services to a telecommunications operator's end users. For example, the authentication information determining device AIDD can ensure that only a billing apparatus BA which is allowed to communicate with the content data provider CDP' and the telecommunications operator TO can process the characteristics information CIN and the tariffing information TI. This storage device is also advantageous because it is able to buffer pieces of information which ome from different parties of the systems at different times.

As also explained above, the billing apparatus BA in accordance with the invention may use, in addition to the inventive features as described above, also conventional billing features such as the additional usage of pre-agreed commercial agreements PAC, PAC'.

Furthermore, the billing apparatus BA, as shown in Fig. 4, may comprise a gateway device GATE including a data set characteristics monitoring device adapted to monitor a data set DS1, ... DSn provision from the content data provider CDP' to the end user terminal EP through the telecommunication network TNET. As is apparent from Fig. 4, the gateway device GATE is connected through the communication link CL respectively with the content data provider CDP' and the telecommunications operator TO or its telecommunication network TNET. That is, when the content data provider CDP', in response to a data set provision request message from the end user terminal EP, starts transmitting the content data through the communication link CL to the telecommunications operator TO, the gateway device GATE can monitor the data volume and/or the elapsed time for the provision of said data set from said content data provider CDP' to said end user terminal.

For this purpose the gateway device GATE can comprise a volume determining device VDD adapted to the determine the data volume of the data set provision and/or a timing device TD adapted to determine the elapsed time for the provision of said data set from said data content provider CDP' to said end user terminal EP via said telecommunication network TNET.

The gateway device GATE is also connected to the calculating device CALC which can use e.g. the determined data volume and/or the elapsed time as an additional parameter for validating the billing information BI and, if the characteristics of the data set are not within the thresholds of those negotiated, the gateway device GATE can perform a control to prevent the delivery of the data set to the telecommunication network TNET and ultimately to the end-user. Thus, the gateway device only passes content data if e.g. a comparison of the data characteristics previously stored (during the negotiation) match those which the gateway device monitors through its data set characteristics monitoring device when the content data to be delivered actually arrives at the gateway device, preferably also on a user-specific basis since the negotiation is of course for each data set dependant on the user or user-id determined.

Furthermore, as shown in Fig. 4, the billing apparatus BA can comprise a storage device CISD adapted to store the characteristics information of data sets as determined by said data set characteristics information determining device DSIDD or tariffing information TI from said telecommunications operator. The storage device CISD can also store characteristics information of data sets together with characteristics information of the end user terminal together. Thus, certain characteristics information can be correlated with certain end users or end user terminals and this can be further used in calculating the billing information BI. If for example, a specific end user requests a certain content-type very often, then it is possible to implement certain concessions for this particular end user. This storage device is also advantageous because it is able to buffer pieces of information which come from different parties of the systems at different times.

Thus, the storage device allows to have the characteristics information (and, as explained below, possibly the data set itself) stored over a long period of time and for many repetitive end user request messages such that statistics can be run for the data sets and/or the end user terminals regarding their provision and request behaviour.

As explained, the main function of the gateway device GATE is that data sets sent by the content data provider CDP to the end user terminal EP can be permitted to be delivered or prevented from being delivered. This control of the gateway device GATE can be performed in accordance with various control criteria. In using these different control criteria also the data set provision monitoring device of the gateway device GATE is adapted to monitor a data set DS1 ... DSn provision from the content data provider CDP' to the end user terminal EP via said telecommunication network TNET in a specific manner.

As explained above, in accordance with one embodiment the data set provision monitoring device may monitor the data set being delivered to the end user terminal EP to determine its characteristics and derive characteristics information CIN in accordance therewith. The gateway device GATE can then compare the characteristics information CIN determined for the data set when it actually arrives at the gateway device GATE with the characteristics information CIN which were already received from the content data provider CDP' during the billing information BI calculation by the calculating device CALC (and which were stored in the storage device CISD). Thus, in addition to the fact that for example the price (billing information) was accepted by the end user terminal EP before the actual data set is provided, the gateway device GATE can perform an additional check to only then allow the provision of the data set if the characteristics of the.data set pending to be delivered through the gateway device GATE match with the characteristics information CIN previously stored.

This can also be performed on a user-specific basis. That is, in accordance with another embodiment, a unique user identification ID may be captured as a part of an authentication process performed by the telecommunications operator TO either when the end user terminal EP issues the original request for the data set provision or alternatively after the billing information BI has been confirmed by the end user EP, i.e. shortly before the data set provision from the content data provider CDP' starts. In this case, the content data provider CDP' may send, in association with the data set, an identifier identifying the data set provision target (end user terminal) which is to be the recipient of the data set. This content data provision target identification can be sent together with the data set - in which case it is detected at the gateway device GATE - or can be sent through the information link IL for example to the storage device CISD of the billing apparatus BA.

Thus, in any case, the gateway device GATE will know that the data set pending to be delivered through the telecommunication network TNET is to be delivered to a specific end user terminal EP and it will perform a control to permit the delivery of this data set to the specific end user terminal EP only if the previously stored characteristics information CIN for this end user terminal EP (or the end user) match the characteristics information CIN determined by the data set provision monitoring device of the gateway device GATE for the pending data set and if the identifications match. Should the data set characteristics and/or the unique user identification ID not match the data set characteristics and/or the user-specific data set characteristics, then the data set can be prevented from being delivered to the end user terminal EP to which the content data provider CDP intends to send the data set.

The above described control performed by the gateway device GATE protects in particular the telecommunications operator TO to prevent an unauthorized use of its telecommunication network TNET. Furthermore, the control protects the content data provider CDP from an accidental delivery of a data set to an incorrect end user terminal EP. Furthermore, the control prevents the content data provider CDP from inadvertently delivering to the end user terminal EP a data set (data sets) of a higher value (higher costs) than previously agreed with the user during the billing information determination and acceptance procedure. Furthermore, the control prevents the end user terminal EP from receiving other data sets than those already agreed during the billing information determination and acceptance procedure. Finally, the control protects the telecommunication network TNET from having to transport data for which the billing information, e.g. the actual costs, have not previously been negotiated and agreed before the actual delivery. The following three examples should illustrate the control carried out by the gateway device GATE.

In a first example, the gateway device GATE receives the data set sent from the content data provider CDP to be sent to a particular end user terminal EP and stores the date set. The data set monitoring device of the gateway device GATE then performs a characteristics check against the characteristics information previously stored as part of the billing agreement procedure. The gateway device GATE then also checks the user ID (user identification) against that previously stored as part of the authentication procedure with the telecommunications operator TO (performed either when the user terminal EP issues its original data set provision request or carried out after the end of the billing agreement procedure. The gateway device GATE then permits or disallows a data set delivery to the intended end user terminal EP depending on whether or not the characteristics check is successful.

In a second example, the content data provider CDP' can notify the gateway device GATE of the unique user ID and the data set characteristics of the data set which is about to be sent. The gateway device GATE then checks the data set characteristics (the characteristics information) with that stored in the billing apparatus BA, possibly also on a user-specific basis dependent on the user ID (since during the billing agreement procedure the data set characteristics information CIN may be stored on a user-specific basis). If the comparison of the characteristics information CIN received from the content data provider CDP' with the previously stored - possibly user-specific - characteristics information indicates a match, the gateway device GATE informs the content data provider CDP about this and then the content data provider CDP' sends the data set to the end user terminal EP. Then, the data set monitoring device of the gateway device GATE will again monitor the data set provision and it can raise an alarm condition if the sent data set does not match the data set for which the characteristics comparison has just been carried out.

In a third example, the gateway device GATE may perform a cache'ing functionality as follows. An end user terminal EP may request the provision of a data set from the content data provider CDP' and the content data provider CDP' checks with the gateway device GATE thereafter to find out if the requested data set has been previously sent (possibly to the same user) and has already been stored within the gateway device GATE previously. The gateway device GATE may have previously stored this data set when it was sent from the content data provider CDP' to the same or another end user terminal EP. Alternatively, the gateway device GATE or the storage device CISD may have stored the data set during the characteristics information CIN determination procedure (if the determination of the characteristics is carried out in the billing apparatus BA). If the requested data set has already been stored, then the billing and charging mechanisms can be followed (i.e. the above described billing information calculation), but the content data provider CDP' does not have to resend the data to the gateway device GATE. That is, the gateway device GATE may simply read out the stored data set if the billing information has for example been accepted by the end user terminal, and then forwards the data set to the requesting end user terminal EP (which has accepted to be charged for this data set).

This may also be carried out with some time delay. That is, the gateway device GATE could also store the data set requested by the user to be delivered at a later time of day when costs may be cheaper. For example, in response to having been provided with the billing information BI from the content data provider CDP' the end user terminal EP might find the charges indicated in the billing information BI too high for an immediate data set provision and might prefer to have the data set provided at another time of day. In this case, the end user terminal EP may send back a message to the content data provider CDP' in order to negotiate and accept new billing information BI indicating that the data set will be provided at a specific price at a specific new time of day. If the data set has been previously stored by the billing apparatus BA, the gateway device GATE only has to set a timer which will then trigger the reading out of the data set and the provision of it to the end user terminal EP when the timer value matches the pre-negotiated time of day provision.

If the data set has not been previously stored, the gateway device GATE can initiate a storage of the data set when it arrives from the content data provider CDP' and will only forward it to the end user terminal EP at the pre-negotiated time of day.

Of course, instead of the time-of-day other criteria regarding time features can be used, for example the day of delivery, the month of delivery or the speed of delivery (e.g. the bit-rate of transmission through the telecommunication network TNET) or other criteria.

It is also conceivable, in accordance with another embodiment of the invention, that the data set provision is provided in a segmented way. For example, the end user terminal EP and the billing apparatus BA may have pre-negotiated the data set provision with a particular bit-rate at a particular time of day. If this bit-rate is not available at a particular time of day and the bit-rate of provision has been indicated as the primary parameter by the end user terminal, the gateway device GATE will only forward the data set to the end user terminal EP if at the particular time of day the bit-rate is actually available in the telecommunications network TNET. If not, the gateway device GATE may perform another attempt for example a the same time of day on a following day.

It may also do so on a segmented basis, i.e. a first part of the data set may be provided at the particular time and with the particular bit-rate on one day and the rest of the data set may be provided on a following day, for example if during the transmission the bit-rate deteriorates. Also other criteria for this segmented data set provision may be used. In all these examples of the "store and forward" functionality, there is the advantage that the content data provider CDP' does not have to be triggered again when the time for delivery comes because the data set (or segments thereof) are already stored in the billing apparatus BA and it can autonomously control the forwarding of the data set if in principle the pre-negotiation through the billing agreement procedure was successful (the end user terminal EP has in principle accepted the charges before the data set is provided).

### FIRST PREFERRED MODE OF THE INVENTION

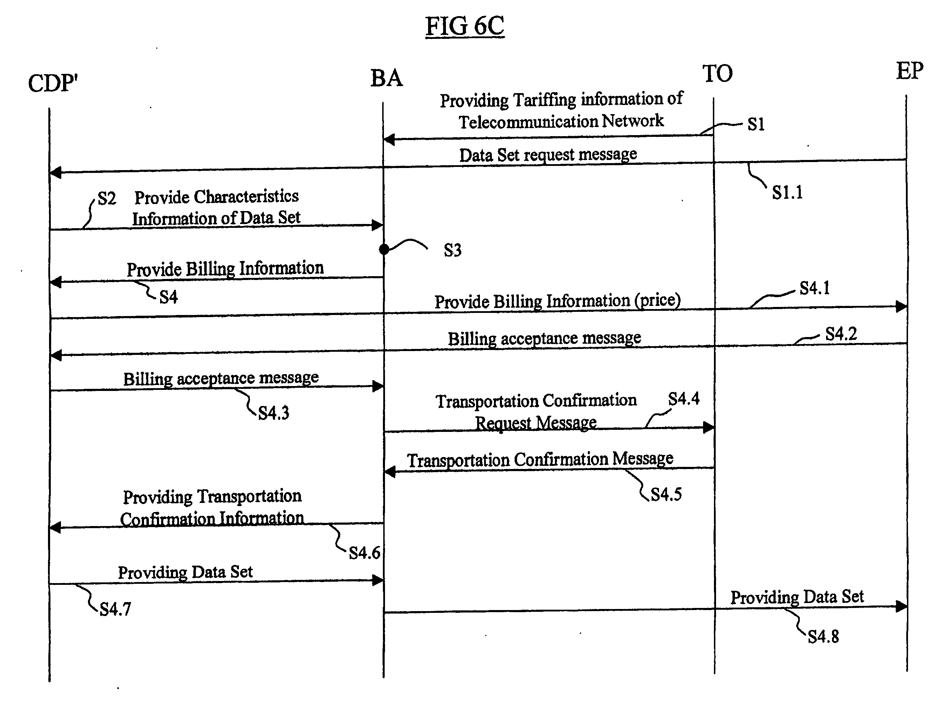

Although embodiments of the present invention have been described above with reference to Figs. 3, 4, 5, hereinafter, a special embodiment of the invention will be described with reference to Fig. 6c. This embodiment is currently considered by the inventors to be one of the best modes of the invention.

In step S1 the telecommunications operator TO provides tariffing information TI of the telecommunication network to the billing apparatus BA where it is received in the tariffing information determining device TIDD.

In step S1.1, the end user terminal EP sends a data set request message to the content data provider CDP' through the telecommunications operator TO, i.e. through its telecommunication network TNET. The data set request message in step S1.1 uniquely identifies the data set or the data sets which are requested by the end user terminal EP to be returned by the content data provider CDP'.

In step S2, the content data provider CDP' provides the characteristics information CIN of the requested data sets to the billing apparatus BA where the characteristics information CIN is received in the data set characteristics information determining device DSIDD and is possibly stored in the storage device CISD.

In step S3, the calculating device CALC calculates the billing information BI and in the subsequent step S4 the billing information BI is provided, through the output device OUT, to the content data provider CDP'.

In step S4.1, the billing information BI, for example the price, is provided from the content data provider CDP' to the end user terminal EP. In step S4.2 the user can send a billing acceptance message to the content data provider CDP' which subsequently, in step S4.3, sends the billing acceptance message to the billing apparatus BA. Thus, the billing acceptance message is sent to the billing apparatus BA via said content data provider CDP'. The aforementioned billing acceptance message indicates the acceptance of charges as indicated by said billing information BI, in response to the provision of said billing information to the requesting end user terminal in step S4.1. In this manner the billing information BI is provided to the requesting end user terminal EP before said data set is actually provided to said end user terminal such that after receiving the billing information in step S4.1 the end user terminal EP still has the possibility to accept or reject the price for the requested data set provision. The fact that the billing information can be provided to the end user terminal EP before the data set is provided is a unique feature which is not available in the prior art.

It would even be conceivable that after receiving the billing information BI in step S4.1 the end user terminal EP starts a negotiation procedure with the content data provider CDP' to negotiate the price.

For example, the end user terminal EP could indicate to the content data provider CDP' that in fact the end user terminal does not only want the provision of the single data set, for example a picture data, but in fact a large plurality of picture data sets such that the content data provider CDP' or respectively the calculating device CALC can consider such information when calculating a new billing information BI which for example gives a concession to the end user terminal if large amounts of picture data are requested.

Eventually, the end user terminal EP issues the billing acceptance message in step S4.2 which is then routed to the billing apparatus BA.

As also shown in Fig. 6c, it is possible to send a transportation confirmation request message in step S4.4 from the billing apparatus BA to the telecommunications operator TO. This transportation confirmation request message S4.4 and/or the billing information message S4.1 can indicate to the telecommunications operator the billing information BI. Hence, the telecommunications operator TO can once more decide on the basis of the billing acceptance message whether or not to allow the transportation of the requested data sets through its telecommunication network TNET. The telecommunications operator TO then provides in step S4.5 a transportation confirmation message to the billing apparatus BA which provides the transportation confirmation message in step S4.6 to the content data provider CDP'. In this manner the transportation confirmation message indicates the confirmation of the telecommunications operator TO to transport the data set or data sets, in response to the provision of the billing information BI to said telecommunications operator TO.

As is also apparent from Fig. 6c, the confirmation message provision is performed before the actual data set is provided to said requesting end user terminal EP in step S4.7 and step S4.8. Although it is shown in Fig. 6c that the data set is first provided in step S4.7 to the billing apparatus BA and subsequently from the billing apparatus BA to the end user terminal EP, it also possible, that the requested data set or requested data sets are directly routed from the content data provider CDP' through the telecommunications operator TO (more specifically through its telecommunication network TNET) to the end user terminal EP.

Whilst Fig. 6c shows a preferred first best mode of the invention, of course it should be noted, that the sequence of some steps and/or the provision of some steps are optional. For example, step S1 can also be carried out after step S2. Also the billing acceptance message S4.2 is optional since it may be considered sufficient if the end user terminal EP is merely provided with the billing information BI without requesting an acceptance from it.

Also the transportation confirmation request and transportation confirmation messages S4.4, S4.5, S4.6 are optional messages.

However, as can be understood from Fig. 6c, on the basis of the tariffing information TI and the characteristics information CIN billing information BI is always provided to the end user terminal EP in response to a data set request message and the provision of the billing information is done preferably before the data set is actually provided from the content data provider CDP'.

### SECOND PREFERRED MODE OF THE INVENTION

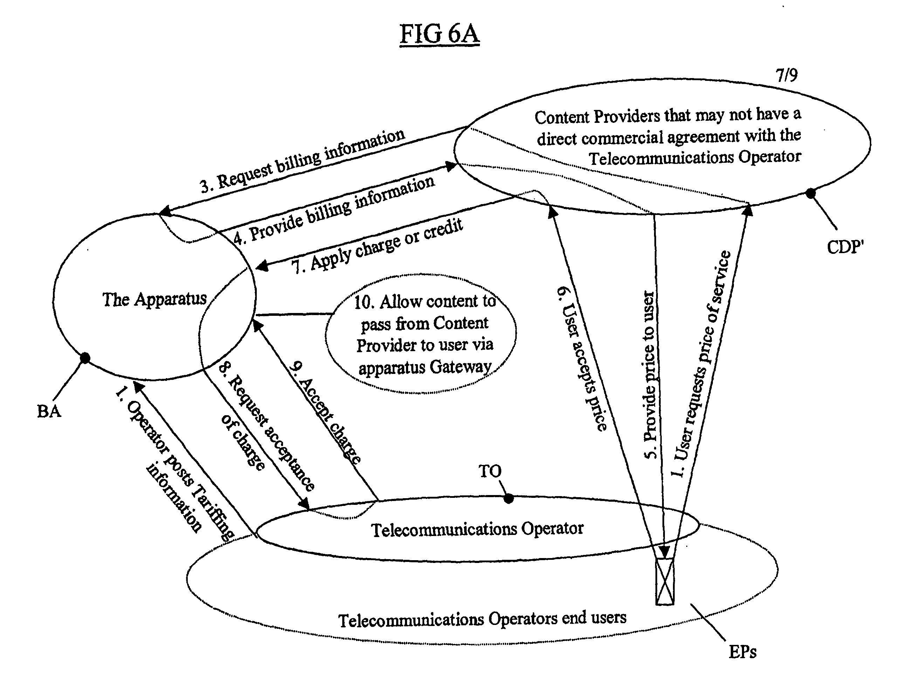

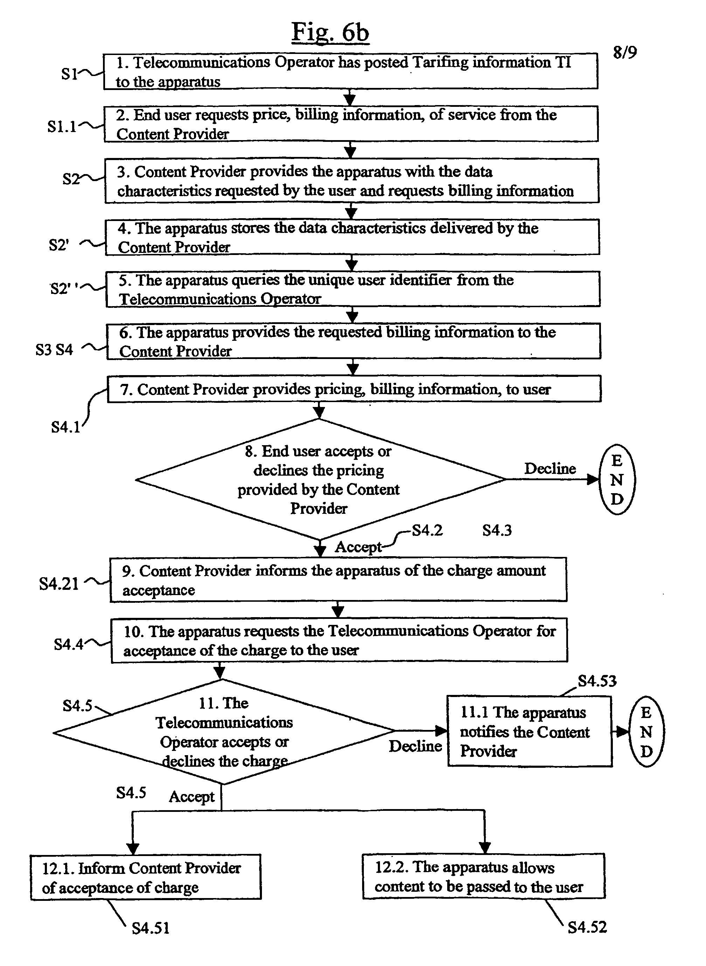

Fig. 6a and 6b show, similarly as the above described Fig. 6c, another flowchart of a second best mode of the invention. The encircled reference numerals have already been described in detail in Fig. 6c. However, there are additional steps which are not encircled and which will be explained below.

In step S1.1, it is possible, that the end user terminal actively requests the price (billing information) of service from the content data provider. This is done after in step S1 the telecommunications operator has posted tariffing information to the device. In step S2, the content data provider provides the billing apparatus with the data characteristics requested by the user and requests billing information. After storing the data characteristics delivered by the content data provider in the data characteristics storage means CISD in step S2', the billing apparatus can also query the unique user identifier from the telecommunications operator TO in step S2''. The apparatus provides the requested billing information in steps S3, S4 to the content provider and thereafter steps S4.1, S4.2, S4.3 are carried out, similarly as in Fig. 6c.

In step S4.21 the content provider informs the billing apparatus of the charge amount acceptance and thereafter the steps S4.4, S4.5 are carried out, which have already been described with reference to Fig. 6c. In step 54.51 the billing apparatus informs the content data provider of the acceptance of the charge and in step S4.52 the billing apparatus allows the content to be passed to the end-user, i.e. the step S4.52 is carried out before the step S4.8 in Fig. 6c.

An example should illustrate the preferred mode in Fig. 6a and 6b. For easier understanding, hereinafter the numbers of stages inside the boxes in Fig. 6b are referred to and they are also used in Fig. 6a.

In Fig. 6b, stage 2, the end user visits a content data provider and requests "quotation for service" which could be to purchase a stock portfolio download or a book purchase, for example. The end user has access, from the telecommunications operator's resources, to the content data provider either directly or via a portal service, depending on the telecommunications operator network arrangements.

In Fig. 6b, stage 3, the content data provider provides the billing apparatus the characteristics of the data set for example over XML and requests tariffing information.

In Fig. 6b, stage 4, the billing apparatus stores the data characteristics delivered by the content data provider.

In Fig. 6b, stage 5, the billing apparatus queries the unique user identifier from the tlecommunications operator, preferably via XML interface, for unique identity associated to the end user (for delivery of said data set requested) that will be used to form the basis of billing for the requested data set.

In Fig. 6b, stage 6, the billing apparatus provides the content data provider the requested tariffing information calculated from the data characteristics provided in stage 4 and the tariffing information for that particular telecommunications operator provided in stage 1 with an associated unique identifier derived from the unique user identifier obtained in stage 5.

In Fig. 6b, stage 7, the content data provider displays their fee for service to the end-user which may be for example telecommunications operator charges + content data provider fees + the billing apparatus commission.

In Fig. 6b, stage 8, end-user accepts or declines the quotation from the content data provider.

In Fig. 6b, stage 9, content data provider notifies the billing apparatus for example over XML of acceptance of charge by the user and the billing apparatus stores the charge amount.

In Fig. 6b, stage 10, the apparatus provides the unique user identification and the charge amount to the telecommunications operator and requests acceptance of the charge (allowing the telecommunications operator to apply the charge to the users bill).

In Fig. 6b, stage 11, the telecommunications operator accepts or declines.

In Fig. 6b, stage 11.1, if telecommunications operator declines, the billing apparatus notifies the content data provider and provides the content provider with the telecommunications operators decision.

In Fig. 6b, stage 12.1, the billing apparatus informs the content data provider of acceptance of the charge by the telecommunications operator.

In Fig. 6b, stage 12.2, the billing apparatus updates itself with the new user profile to allow content traffic that conforms to the new user profile, to be passed to the user.

Additional functions provided by the apparatus are that billing information is provided to the telecommunications operator on a per telecommunications operator basis on-line, off-line or via an interface to be agreed with each telecommunications operator. It is also possible that charging information is provided to the content data providers on a per content data provider basis either on-line, off-line or via an interface to be agreed with each content data provider.

Thus, in the preferred mode of the invention the following features/steps may be employed alone or in combination:
a) a telecommunications operator interface to provide their tariffing information;
b) an interface to allow content data providers to retrieve calculated telecommunications operator tariffing information;
c) a gateway that permits or disallows content delivery to the end user based upon negotiated billing between content data provider and telecommunications operator using the billing apparatus;
d) a provision of billing information to the telecommunications operators; and
e) a provision of charging information to the content providers.

### INDUSTRIAL APPLICABILITY

As explained above, the present invention provides a billing apparatus BA, a billing method (Fig. 5) and a content data provision system SYS (Fig. 3) which allow a very flexible and dynamic calculation of billing information even if no pre-agreed commercial arrangements exist between in particular the content data provider and the telecommunications operator.

Such a billing apparatus, method and content data provision system can be used in connection with any telecommunications operator TO and it may not only be used for the billing of telecommunication services but it may also be applied to the billing of internet service provider (ISP) services to end user terminals. The skilled person understands that any type of telecommunication networks TNET may be used in connection with the invention, such as a fixed network, an ISDN network, a mobile radio communication network and/or a GPRS or other packet switched communication network. Furthermore, all the messages explained above may be transmitted via a fixed line or via radio. Furthermore, it is possible that all the request and provision messages are transferred through the internet, for example by using URLs on the internet.

The telecommunication network TNET can be replaced by the internet and/or an intranet. Thus, the invention has various application possibilities which should be recognized by a skilled person in this technical field.

Furthermore, the invention comprises embodiments which consist of combinations of individual steps/features which have been described and shown separately in the description, the figures and the claims.
Furthermore, the skilled person may devise, on the basis of the above teachings, further advantageous embodiments which are however within the scope of the attached claims.

Reference numerals in the claims only serve clarification purposes and do not limit the scope of these claims.

## Claims

1. A billing apparatus (BA) for providing billing information (BI) for at least one data set (DS1..DSn) residing at a content data provider (CDP') to be provided to an end user terminal (EP) through a telecommunication network (TNET), comprising:
a) a tariffing information determining device (TIDD) for determining tariffing information (TI) from the telecommunications operator (TO) of said telecommunication network (TNET); and
***characterized by***
b) a data set characteristics information determining device (DSIDD) for determining for said at least one data set (DS) characteristics information (CIN) from said content data provider (CDP');
c) a calculating device (CALC) for calculating said billing information (BI) on the basis of at least said tariffing information (TI) from the telecommunications operator (TO) and said characteristics information (CIN) of said at least one data set from the content data provider (CDP');
d) an outputting device (OUT) for outputting said calculated billing information (BI) to said end user terminal (EP) before said at least one data set (DS) is provided to said end user terminal (EP).

2. A billing apparatus (BA) according to claim 1,
***characterized in that***
said outputting device (OUT) comprises a charging amount information communicating device (CAICD) which is connected at least to said content data provider (CDP') via an information link (IL), for communicating said calculated billing information (BI) at least to said content data provider (CDP').

3. A billing apparatus (BA) according to claim 1,
***characterized in that***
said outputting device (OUT) comprises a charging amount information communicating device (CAICD) which is connected at least to said telecommunications operator (TO) via an information link (IL), for communicating said calculated billing information (BI) at least to said telecommunications operator (TO).

4. A billing apparatus (BA) according to claim 2 or 3,
***characterized in that***
said outputting device (OUT) comprises a bill sending device (BSD) adapted to send a bill to said telecommunications operator (TO) on the basis of said billing information (BI).

5. A billing apparatus (BA) according to claim 1 or 2 or 3,
***characterized by***
an authentication information determining device (AIDD) adapted to exchange authentication information data with one or more of said content data provider (CDP'), said telecommunications operator (TO) and said end user terminal (EP).

6. A billing apparatus (BA) according to one or more of claims 1 to 5, ***characterized by***
a data set provision monitoring device (GATE) adapted to monitor a data set (DS1...DSn) provision from the content data provider (CDP') to the end user terminal (EP) via said telecommunication network (TNET).

7. A billing apparatus (BA) according to claim 6,
***characterized in that*** said data set provision monitoring device (GATE) comprises:
a volume determining device (VDD) adapted to determine the data volume of said data set provision; and/or
a timing device (TD) adapted to determine the elapsed time and/or time of time for the provision of said data set from said data content data provider (CDP') to said end user terminal (EP) via said telecommunication network (TNET).

8. A billing apparatus (BA) according to any of the claims 1 to 7, ***characterized by***
a storage device (CISD) adapted to store characteristics information (CIN) of data sets as determined by said data set characteristics information determining device (DSIDD) or tariffing information (TI) from said telecommunications operator (TO).

9. A billing apparatus (BA) according to any of the claims 1 to 7, ***characterized in that***
said characteristics information (CIN) is one or more of the data volume of said data set,
the time-of-day of providing said data set to said end user terminal (EP),
the content type of said data set,
the type of configuration of said end user terminal (EP) to which said data set is provided,
the type of content data provider and
the bit rate of data transmission of said data set provision

10. A method for providing billing information (BI) for at least one data set (DS1. .DSn) residing at a content data provider (CDP') to be provided to an end user terminal (EP) through a telecommunication network (TNET), using a billing apparatus (BA), comprising the following steps:
a) providing (S1) tariffing information (TI) by the telecommunications operator (TO) of said telecommunication network (TNET); and
***characterized by*** **the** ***following steps:***
b) providing (S2) for said at least one data set (DS) characteristics information (CIN) by said content data provider (CDP');
c) calculating (S3) said billing information (BI) at least from said tariffing information (TI) from the telecommunications operator (TO) and said characteristics information provided by said content data provider (CDP'); and
d) outputting (S4) of said billing information (BI) to said end user terminal (EP) before said at least one data set (DS) is provided to said end user terminal (EP).

11. A method according to claim 10,
***characterized by the step of*** communicating (S4) said calculated billing information (BI) at least to said content data provider (CDP').

12. A method according to claim 10,
***characterized by the step of*** communicating (S4.4) said calculated billing information (BI) at least to said telecommunications operator (TO).

13. A method according to claim 10,
***characterized by the step of***
exchanging authentication information data with one or more of said content data provider (CDP'), said telecommunications operator (TO) and said end user terminal (EP).

14. A method according to claim 10,
***characterized by the step of*** monitoring a data set (DS1...DSn) provision from the content data provider (CDP') to the end user terminal (EP) via said telecommunication network (TNET).

15. A method according to claim 14,
***characterized in that***
said monitoring step comprises the step of determining the data volume of said data set provision; and/or determining the elapsed time for the provision of said data set from said data content provider (CDP') to said end user terminal (EP).

16. A method according to claim 10, *further **characterized by the step of*** preparing (S3, S4.4) a bill on the basis of said billing information and providing said bill to said telecommunications operator (TO).

17. A method according to claim 10, ***characterized in that***
said characteristics information (CIN) is the data volume of said data set or the content type of said data set or the time-of-day of providing said data set to said end user terminal (EP) or the type of configuration of said end user terminal (EP) to which said data set is provided or the type of content data provider or the bit rate of data transmission of said data set provision.

18. A method according to claim 10,
***characterized by***
sending (S1.1) from said end user terminal (EP) a data set request message to said content data provider (CDP'), said data set request message indicating said data set to be transferred to said end user terminal; wherein
said content data provider (CDP') provides (S4.7, S4.8) said requested data set to said end user terminal (EP) in response to said request message; and wherein
said billing information (BI) is provided (S4.1) to said requesting end user terminal (EP) before said data set is provided (S4.7, S4.8) to said end user terminal.

19. A method according to claim 18,
***characterized by***
sending (S4.2) a billing acceptance message from said requesting end user terminal (EP) to the billing apparatus (BA) via said content data provider (CDP'), said billing acceptance message indicating the acceptance of charges as indicated by said billing information (BI), in response to said provision of said billing information to said requesting end user terminal (EP), wherein said billing acceptance message (S4.2) is sent before said requested data set is provided to said requesting end user terminal (EP) by said data content data provider (CDP').

20. A method according to claim 18 or 19,
***characterized by***
sending a transportation confirmation message (S4.5) from said telecommunications operator (TO) to the billing apparatus (BA), said transportation confirmation message (S4.5) indicating the confirmation of said telecommunications operator (TO) to transport said data set, in response to the provision (S4.4) of said billing information to said telecommunications operator (TO), wherein said confirmation message is sent (S4.5) before said data set is provided (S.47, S4.8) to said requesting end user terminal (EP).

21. A content data provision control system (SYS) for controlling content data (CD) delivery to end user terminals (EP), comprising a billing apparatus (BA) according to one or more of claims 1-9, a content data provider (CDP') including a data set storage device (DSSD) adapted to store data sets to be provided to said end user terminals (EP), and one or more end user terminals (EP), wherein said outputting device (OUT) is adapted to output said billing information (BI) to said end user terminal (EP) before said data content provider (CDP') provides (S4.7, S4.8) said data set to said end user terminal in response to a data set request message issued (S1.1) by an end user terminal (EP).

22. A content data provision system (SYS) according to claim 21, ***characterized in that***
said outputting device (OUT) is adapted to output said billing information (BI) to said end user terminal (EP) via said content data provider (CDP').

23. A content data provision system (SYS) according to claim 21, ***characterized in that***
said outputting device (OUT) is adapted to output said billing information (BI) to said end user terminal (EP) via said telecommunications operator (TO).

## Patentansprüche

1. Eine Abrechnungsvorrichtung (BA) zum Bereitstellen von Abrechnungsinformation (BI) für mindestens einen sich bei einem Inhaltsdatenanbieter (CDP') befindenden Datensatz (DS1...DSn), der einem Endbenutzerendgerät (EP) durch ein Telekommunikationsnetzwerk (TNET) bereitzustellen ist, umfassend:
a) ein Tarifinformationsbestimmungsgerät (TIDD) zum Bestimmen von Tarifinformation (TI) von dem Telekommunikationsbetreiber (TO) des Telekommunikationsnetzwerkes (TNET) ; und
**gekennzeichnet durch**
b) ein Datensatz-Eigenschaftsinformations-Bestimmungsgerät (DSIDD) zum Bestimmen für den mindestens einen Datensatz (DS) von Eigenschaftsinformation (CIN) von dem Inhaltsdatenanbieter (CDP');
c) ein Rechengerät (CALC) zum Berechnen der Abrechnungsinformation (BI) basierend auf mindestens der Tarifinformation (TI) von dem Telekommunikationsbetreiber (TO) und der Eigenschaftsinformation (CIN) des mindestens einen Datensatzes von dem Inhaltsdatenanbieter (CDP');
d) ein Ausgabegerät (OUT) zum Ausgeben der berechneten Abrechnungsinformation (BI) an das Endbenutzerendgerät (EP) bevor der mindestens eine Datensatz (DS) dem Endbenutzerendgerät (EP) bereitgestellt wird.

2. Eine Abrechnungsvorrichtung (BA) nach Anspruch 1,
**dadurch gekennzeichnet, dass**
das Ausgabegerät (OUT) ein Gerät zum Kommunizieren von Belastungsbetragsinformation (CAICD) umfasst, das mit mindestens dem Inhaltsdatenanbieter (CDP') über eine Informationsverbindung (IL) verbunden ist, zum Kommunizieren der berechneten Abrechnungsinformation (BI) an mindestens den Inhaltsdatenanbieter (CDP').

3. Eine Abrechnungsvorrichtung (BA) nach Anspruch 1,
**dadurch gekennzeichnet, dass**
das Ausgabegerät (OUT) ein Gerät zum Kommunizieren von Belastungsbetragsinformation (CAICD) umfasst, das mit mindestens dem Telekommunikationsbetreiber (TO) über eine Informationsverbindung (IL) verbunden ist, zum Kommunizieren der berechneten Abrechnungsinformation (BI) an mindestens den Telekommunikationsbetreiber (TO).

4. Eine Abrechnungsvorrichtung (BA) nach Anspruch 2 oder 3,
**dadurch gekennzeichnet, dass**
das Ausgabegerät (OUT) ein Rechnungssendegerät (BSD) umfasst, das ausgebildet ist zum Senden einer Rechnung an den Telekommunikationsbetreiber (TO) basierend auf der Abrechnungsinformation (BI).

5. Eine Abrechnungsvorrichtung (BA) nach Anspruch 1 oder 2 oder 3,
**gekennzeichnet durch**
ein Authentifizierungsinformations-Bestimmungsgerät (AIDD) ausgebildet zum Austauschen von Authentifizierungsinformationsdaten mit einem oder mehreren aus der Gruppe von dem Inhaltsdatenanbieter (CDP'), dem Telekommunikationsbetreiber (TO) und dem Endbenutzerendgerät (EP).

6. Eine Abrechnungsvorrichtung (BA) nach einem oder mehreren der Ansprüche 1 bis 5,
**gekennzeichnet durch**
einen Datensatzbereitstellungs-Überwachungsgerät (GATE), das ausgebildet ist zum Überwachen einer Datensatz-(DS1...DSn)-Bereitstellung von dem Inhaltsdatenanbieter (CDP') an das Endbenutzerendgerät (EP) über das Telekommunikationsnetzwerk (TNET).

7. Eine Abrechnungsvorrichtung (BA) nach Anspruch 6,
**dadurch gekennzeichnet, dass**
das Datensatzbereitstellungs-Überwachungsgerät (GATE) umfasst:
ein Volumen-Bestimmungsgerät (VDD), das ausgebildet ist zum Bestimmen des Datenvolumens der Datensatzbereitstellung; und/oder
ein Zeiterfassungsgerät (TD), das ausgebildet ist zum Bestimmen der abgelaufenen Zeit und/oder der Zeit, von der Zeit für die Bereitstellung des Datensatzes von dem Inhaltsdatenanbieter (CDP') an das Endbenutzerendgerät (EP) über das Telekommunikationsnetzwerk (TNET).

8. Eine Abrechnungsvorrichtung (BA) nach einem der Ansprüche 1 bis 7,
**gekennzeichnet durch**
ein Speichergerät (CISD), das ausgebildet ist zum Speichern von Eigenschaftsinformation (CIN) der Datensätze, wie bestimmt **durch** das Datensatz-Eigenschaftsinformations-Bestimmungsgerät (DSIDD) oder von Tarifinformation (TI) von dem Telekommunikationsbetreiber (TO).

9. Eine Abrechnungsvorrichtung (BA) nach einem der Ansprüche 1 bis 7,
**dadurch gekennzeichnet, dass**
die Eigenschaftsinformation (CIN) eines oder mehrerer der folgenden Elemente ist aus,
dem Datenvolumen des Datensatzes, der Zeit des Tages zum Bereitstellen des Datensatzes bei dem Endbenutzerendgerät (EP), der Inhaltsart des Datensatzes, der Konfigurationsart des Endbenutzerendgeräts (EP), dem der Datensatz bereitgestellt wird, der Art des Inhaltsdatenanbieters und der Bitrate der Datenübertragung der Datensatzbereitstellung.

10. Ein Verfahren zum Bereitstellen von Abrechnungsinformation (BI) für mindestens einen sich bei einem Inhaltsdatenanbieter (CDP') befindlichen Datensatz (DS1...DSn), der einem Endbenutzerendgerät (EP) durch ein Telekommunikationsnetzwerk (TNET) bereitzustellen ist, unter Verwendung einer Abrechnungsvorrichtung (BA), umfassend die folgenden Schritte:
a) Bereitstellen (S1) von Tarifinformation (TI) durch den Telekommunikationsbetreiber (TO) des Telekommunikationsnetzwerks (TNET); und
**gekennzeichnet durch** die folgenden Schritte:
b) Bereitstellen (S2) für den mindestens einen Datensatz (DS) von Eigenschaftsinformation (CIN) **durch** den Inhaltsdatenanbieter (CDP');
c) Berechnen (S3) der Abrechnungsinformation (BI) von mindestens der Tarifinformation (TI) von dem Telekommunikationsbetreiber (TO) und der Eigenschaftsinformation, die **durch** den Inhaltsdatenanbieter (CDP') bereitgestellt wird; und
d) Ausgeben (S4) der Abrechnungsinformation (BI) an das Endbenutzerendgerät (EP) bevor der mindestens eine Datensatz (DS) dem Endbenutzerendgerät (EP) bereitgestellt wird.

11. Ein Verfahren nach Anspruch 10,
**gekennzeichnet durch** den Schritt eines Kommunizierens (S4) der berechneten Abrechnungsinformation (BI) an mindestens den Inhaltsdatenanbieter (CDP').

12. Ein Verfahren nach Anspruch 10,
**gekennzeichnet durch** den Schritt eines Kommunizierens (S4.4) der berechneten Abrechnungsinformation (BI) an mindestens den Telekommunikationsbetreiber (TO).

13. Ein Verfahren nach Anspruch 10, **gekennzeichnet durch** den Schritt
eines Austauschens von Authentifizierungsinformationsdaten mit einem oder mehreren der folgenden: dem Inhaltsdatenanbieter (CDP'), dem Telekommunikationsbetreiber (TO) und dem Endbenutzerendgerät (EP).

14. Ein Verfahren nach Anspruch 10,
**gekennzeichnet durch** den Schritt eines Überwachens einer Datensatz-(DS1...DSn)-Bereitstellung von dem Inhaltsdatenanbieter (CDP') an das Endbenutzerendgerät (EP) über das Telekommunikationsnetzwerk (TNET).

15. Ein Verfahren nach Anspruch 14,
**dadurch gekennzeichnet, dass**
der Überwachungsschritt den Schritt eines Bestimmens des Datenvolumens der Datensatzbereitstellung umfasst; und/oder Bestimmen der abgelaufenen Zeit für die Bereitstellung des Datensatzes von dem Inhaltsdatenanbieter (CDP') an das Endbenutzerendgerät (EP).

16. Ein Verfahren nach Anspruch 10, ferner **gekennzeichnet durch** den Schritt eines Vorbereitens (S3, S4.4) einer Rechnung basierend auf der Abrechnungsinformation und Bereitstellen der Rechnung an den Telekommunikationsbetreiber (TO).

17. Ein Verfahren nach Anspruch 10,
**dadurch gekennzeichnet, dass**
die Eigenschaftsinformation (CIN) das Datenvolumen des Datensatzes ist oder die Inhaltsart des Datensatzes ist oder die Zeit des Tages eines Bereitstellens des Datensatzes an dem Endbenutzerendgerät (EP) ist oder die Konfigurierungsart des Endbenutzerendgeräts (EP) ist, welchem der Datensatz bereitgestellt wird, oder die Art des Inhaltsdatenanbieters ist oder die Bitrate der Datenübertragung der Datensatzbereitstellung ist.

18. Ein Verfahren nach Anspruch 10,
**gekennzeichnet durch** Senden (S1.1) von dem Endbenutzerendgerät (EP) einer Datensatzanforderungsnachricht an den Inhaltsdatenanbieter (CDP'), wobei die Datensatzanforderungsnachricht den an das Endbenutzerendgerät zu transferierenden Datensatz **kennzeichnet**;
wobei der Inhaltsdatenanbieter (CDP') den angeforderten Datensatz dem Endbenutzerendgerät (EP) bereitstellt (S4.7, S4.8), in Ansprechen auf die Anforderungsnachricht; und wobei
die Abrechnungsinformation (BI) dem anfragenden Endbenutzerendgerät (EP) bereitgestellt wird (S4.1) bevor der Datensatz dem Endbenutzerendgerät (S4.7, S4.8) bereitgestellt wird.

19. Ein Verfahren nach Anspruch 18,
**gekennzeichnet durch**
Senden (S4.2) einer Abrechnungsakzeptanznachricht von dem anfordernden Endbenutzerendgerät (EP) an die Abrechnungsvorrichtung (BA) über den Inhaltsdatenanbieter (CDP'), wobei die Abrechnungsakzeptanznachricht die Akzeptanz von Belastungen **kennzeichnet**, wie sie **durch** die Abrechnungsinformation (BI) **gekennzeichnet** werden, in Ansprechen auf die Bereitstellung der Abrechnungsinformation an das anfordernde Endbenutzerendgerät (EP), wobei die Abrechnungsakzeptanznachricht (S4.2) gesendet wird, bevor der angeforderte Datensatz dem anfordernden Endbenutzerendgerät (EP) **durch** den Inhaltsdatenanbieter (CDP') bereitgestellt wird.

20. Ein Verfahren nach Anspruch 18 oder 19,
**gekennzeichnet durch**
Senden einer Transportkonfirmationsnachricht (S4.5) von dem Telekommunikationsbetreiber (TO) an die Abrechnungsvorrichtung (BA), wobei die Transportkonfirmationsnachricht (S4.5) die Konfirmation des Telekommunikationsbetreibers (TO) **kennzeichnet**, den Datensatz zu transportieren, in Ansprechen auf die Bereitstellung (S4.4) der Abrechnungsinformation an den Telekommunikationsbetreiber (TO), wobei die Konfirmationsnachricht gesendet wird (S4.5) bevor der Datensatz dem anfordernden Endbenutzerendgerät (EP) bereitgestellt wird (S4.7, S4.8).

21. Ein Inhaltsdatenbereitstellungs-Steuersystem (SYS) zum Steuern von einer Inhaltsdaten-(CD)-Lieferung an Endbenutzerendgeräte (EP), umfassend eine Abrechnungsvorrichtung (BA) gemäß einem oder mehrerer der Ansprüche 1 bis 9, einen Inhaltsdatenanbieter (CDP') mit einem Datensatzspeichergerät (DSSD), das ausgebildet ist zum Speichern von den Endbenutzerendgeräten (EP) bereitzustellenden Datensätzen, und ein oder mehrere Endbenutzerendgeräte (EP), wobei das Ausgabegerät (OUT) ausgebildet ist zum Ausgeben der Abrechnungsinformation (BI) an das Endbenutzerendgerät (EP) bevor der Dateninhaltsanbieter (CDP') den Datensatz dem Endbenutzerendgerät bereitstellt (S4.7, S4.8), in Ansprechen auf eine Datensatzanforderungsnachricht, die durch ein Endbenutzerendgerät (EP) ausgegeben wird (S1.1).

22. Ein Inhaltsdatenbereitstellungssystem (SYS) nach Anspruch 21,
**dadurch gekennzeichnet, dass**
das Ausgabegerät (OUT) ausgebildet ist zum Ausgeben der Abrechnungsinformation (BI) an das Endbenutzerendgerät (EP) über den Inhaltsdatenanbieter (CDP').

23. Ein Inhaltsdatenbereitstellungssystem (SYS) nach Anspruch 21,
**dadurch gekennzeichnet, dass**
das Ausgabegerät (OUT) ausgebildet ist zum Ausgeben der Abrechnungsinformation (BI) an das Endbenutzerendgerät (EP) über den Telekommunikationsbetreiber (TO).

## Revendications

1. Dispositif de facturation (BA) pour fournir des informations de facturation (BI) pour au moins un ensemble de données (DS1 ... DSn) se trouvant chez un fournisseur de données de contenu (CDP') à fournir à un terminal d'utilisateur final (EP) à travers un réseau de télécommunication (TNET), comprenant :
a) un dispositif de détermination d'informations de tarification (TIDD) pour déterminer des informations de tarification (TI) par l'opérateur de télécommunication (TO) dudit réseau de télécommunication (TNET) ; et
**caractérisé par**
b) un dispositif de détermination d'informations de caractéristiques d'ensemble de données (DSIDD) pour déterminer pour ledit au moins un ensemble de données (DS) des informations de caractéristiques (CIN) par ledit fournisseur de données de contenu (CDP') ;
c) un dispositif de calcul (CALC) pour calculer lesdites informations de facturation (BI) sur la base d'au moins lesdites informations de tarification (TI) par l'opérateur de télécommunication (TO) et lesdites informations de caractéristiques (CIN) dudit au moins un ensemble de données par le fournisseur de données de contenu (CDP') ;
d) un dispositif de sortie (OUT) pour fournir lesdites informations de facturation calculées (BI) audit terminal d'utilisateur final (EP) avant que ledit au moins un ensemble de données (DS) soit fourni audit terminal d'utilisateur final (EP).

2. Dispositif de facturation (BA) selon la revendication 1,
**caractérisé en ce que**
ledit dispositif de sortie (OUT) comprend un dispositif de communication d'informations de montant à faire payer (CAICD) qui est raccordé au moins audit fournisseur de données de contenu (CDP') via une liaison d'information (IL) pour communiquer lesdites informations de facturation calculées (BI) au moins audit fournisseur de données de contenu (CDP').

3. Dispositif de facturation (BA) selon la revendication 1,
**caractérisé en ce que**
ledit dispositif de sortie (OUT) comprend un dispositif de communication d'informations de montant à faire payer (CAICD) qui est raccordé au moins audit opérateur de télécommunication (TO) via une liaison d'informations (IL), pour communiquer lesdites informations de facturation calculées (BI) au moins audit opérateur de télécommunication (TO).

4. Dispositif de facturation (BA) selon la revendication 2 ou 3,
**caractérisé en ce que**
ledit dispositif de sortie (OUT) comprend un dispositif d'envoi de facture (BSD) adapté pour envoyer une facture audit opérateur de télécommunication (TO) sur la base desdites informations de facturation (BI).

5. Dispositif de facturation (BA) selon la revendication 1 ou 2 ou 3, **caractérisé par**
un dispositif de détermination d'informations d'authentification (AIDD) adapté pour échanger des données d'informations d'authentification avec un ou plusieurs desdits fournisseurs de données de contenu (CDP'), ledit opérateur de télécommunication (TO) et ledit terminal d'utilisateur final (EP).

6. Dispositif de facturation (BA) selon ou une plusieurs des revendications 1 à 5, **caractérisé par**
un dispositif de surveillance de fourniture d'ensemble de données (GATE) adapté pour surveiller une fourniture d'ensemble de données (DS1 ... DSn) par le fournisseur de données de contenu (CDP') au terminal d'utilisateur final (EP) via ledit réseau de télécommunication (TNET).

7. Dispositif de facturation (BA) selon la revendication 6, **caractérisé en ce que** ledit dispositif de surveillance de fourniture d'ensemble de données (GATE) comprend :
un dispositif de détermination de volume (VDD) adapté pour déterminer le volume de données de ladite fourniture d'ensemble de données ; et/ou
un dispositif de temporisation (TD) adapté pour déterminer le temps écoulé et/ou le temps de temps pour la fourniture dudit ensemble de données par ledit fournisseur de données de contenu de données (CDP') audit terminal d'utilisateur final (EP) via ledit réseau de télécommunication (TNET).

8. Dispositif de facturation (BA) selon l'une quelconque des revendications 1 à 7, **caractérisé par**
un dispositif de stockage (CISD) adapté pour stocker des informations de caractéristiques (CIN) des ensembles de données comme cela est déterminé par ledit dispositif de détermination d'informations de caractéristiques d'ensemble de données (DSIDD) ou des informations de tarification (TI) par ledit opérateur de télécommunication (TO).

9. Dispositif de facturation (BA) selon l'une quelconque des revendications 1 à 7, **caractérisé en ce que**
lesdites informations de caractéristiques (CIN) sont un ou plus du volume de données dudit ensemble de données,
de l'heure du jour de la fourniture dudit ensemble données audit terminal d'utilisateur final (EP),
du type de contenu dudit ensemble de données,
du type de configuration dudit terminal d'utilisateur final (EP) auquel ledit ensemble de données est fourni,
du type de fournisseur de données de contenu et
du débit binaire de transmission de données de ladite fourniture d'ensemble de données.

10. Procédé pour la fourniture d'informations de facturation (BI) pour au moins un ensemble de données (DS1 ... DSn) se trouvant chez un fournisseur de données de contenu (CDP') à fournir à un terminal d'utilisateur final (EP) à travers un réseau de télécommunication (TNET) utilisant un dispositif de facturation (BA), comprenant les étapes suivantes :
a) fourniture (S1) d'informations de tarification (TI) par l'opérateur de télécommunication (TO) dudit réseau de télécommunication (TNET) ; et
**caractérisé par** les étapes suivantes :
b) fourniture (S2) pour ledit au moins un ensemble de données (DS) d'informations de caractéristiques (CN) par ledit fournisseur de données de contenu (CDP') ;
c) calcul (S3) desdites informations de facturation (BI) au moins à partir desdites informations de tarification (TI) par l'opérateur de télécommunication (TO) et desdites informations de caractéristiques fournies par ledit fournisseur de données de contenu (CDP') ; et
d) fourniture (S4) desdites informations de facturation (BI) audit terminal d'utilisateur final (EP) avant que ledit au moins un ensemble de données (DS) soit fourni audit terminal d'utilisateur final (EP).

11. Procédé selon la revendication 10,
**caractérisé par** l'étape de communication (S4) desdites informations de facturation calculées (BI) au moins audit fournisseur de données de contenu (CDP').

12. Procédé selon la revendication 10,
**caractérisé par** l'étape de communication (S4.4) desdites informations de facturation calculées (BI) au moins audit opérateur de télécommunication (TO).

13. Procédé selon la revendication 10,
**caractérisé par** l'étape d'échange de données d'informations d'authentification avec un ou plusieurs dudit fournisseur de données de contenu (CDP'), dudit opérateur de télécommunication (TO) et dudit terminal d'utilisateur final (EP).

14. Procédé selon la revendication 10,
**caractérisé par** l'étape de surveillance d'une fourniture d'ensemble de données (DS1 ... DSn) par le fournisseur de données de contenu (CDP') au terminal d'utilisateur final (EP) via ledit réseau de télécommunication (TNET).

15. Procédé selon la revendication 14,
**caractérisé en ce que**
ladite étape de surveillance comprend l'étape de détermination du volume de données de ladite fourniture d'ensemble de données ; et/ou détermination du temps écoulé pour la fourniture dudit ensemble de données par ledit fournisseur de contenu de données (CDP') audit terminal d'utilisateur final (EP).

16. Procédé selon la revendication 10, **caractérisé en outre par** l'étape de préparation (S3, S4.4) d'une facture sur la base des informations de facturation et fourniture de ladite facture audit opérateur de télécommunication (TO).

17. Procédé selon la revendication 10, **caractérisé en ce que** lesdites informations de caractéristiques (CIN) sont le volume de données dudit ensemble de données ou du type de contenu dudit ensemble de données ou l'heure du jour de fourniture dudit ensemble de données audit terminal d'utilisateur final (EP) ou du type de configuration dudit terminal d'utilisateur final (EP) pour lequel ledit ensemble de données est fourni ou le type de fournisseur de données de contenu ou le débit binaire de transmission de données de ladite fourniture d'ensemble de données.

18. Procédé selon la revendication 10,
**caractérisé par**
l'envoi (S1.1) par ledit terminal d'utilisateur final (EP) d'un message de demande d'ensemble de données audit fournisseur de données de contenu (CDP'), ledit message de demande d'ensemble de données indiquant ledit ensemble de données à transférer audit terminal d'utilisateur final ; dans lequel
ledit fournisseur de données de contenu (CDP') fournit (S4.7, S4.8) ledit ensemble de données demandé audit terminal d'utilisateur final (EP) en réponse audit message de demande ; et dans lequel
lesdites informations de facturation (BI) sont fournies (S4.1) audit terminal d'utilisateur final demandeur (EP) avant que ledit ensemble de données soit fourni (S4.7, S4.8) audit terminal d'utilisateur final.

19. Procédé selon la revendication 18,
**caractérisé par**
l'envoi (S4.2) d'un message d'acceptation de facturation par ledit terminal d'utilisateur final demandeur (EP) audit dispositif de facturation (BA) via ledit fournisseur de données de contenu (CDP'), ledit message d'acceptation de facturation indiquant l'acceptation de frais comme cela est indiqué par lesdites informations de facturation (BI), en réponse à ladite fourniture desdites informations de facturation audit terminal d'utilisateur final demandeur (EP), dans lequel ledit message d'acceptation de facturation (S4.2) est envoyé avant que ledit ensemble de données demandé soit fourni audit terminal d'utilisateur final demandeur (EP) par ledit fournisseur de données de contenu de données (CDP').

20. Procédé selon la revendication 18 ou 19,
**caractérisé par**
l'envoi d'un message de confirmation de transport (S4.5) par ledit opérateur de télécommunication (TO) à un dispositif de facturation (BA), ledit message de confirmation de transport (S4.5) indiquant la confirmation dudit opérateur de télécommunication (TO) pour transporter ledit ensemble de données, en réponse à la fourniture (S4.4) desdites informations de facturation audit opérateur de télécommunication (TO), dans lequel ledit message de confirmation est envoyé (S4.5) avant que ledit ensemble de données soit fourni (S4.7, S4.8) audit terminal d'utilisateur final demandeur (EP).

21. Système de commande de fourniture de données de contenu (SYS) pour commander la fourniture de données de contenu (CD) aux terminaux d'utilisateur final (EP), comprenant un dispositif de facturation (BA) selon l'une ou plusieurs des revendications 1 à 9, un fournisseur de données de contenu (CDP') comprenant un dispositif de stockage d'ensemble de données (DSSD) adapté pour stocker les ensembles de données à fournir auxdits terminaux d'utilisateur final (EP) et un ou plusieurs terminaux d'utilisateur final (EP), dans lequel ledit dispositif de fourniture (OUT) est adapté pour fournir lesdites informations de facturation (BI) audit terminal d'utilisateur final (EP) avant que le fournisseur de contenu de données (CDP') fournisse (S4.7, S4.8) ledit ensemble de données audit terminal d'utilisateur final en réponse à un message de demande d'ensemble de données émis (S1.1) par un terminal d'utilisateur final (EP).

22. Système de fourniture de données de contenu (SYS) selon la revendication 21, **caractérisé en ce que**
ledit dispositif de fourniture (OUT) est adapté pour fournir lesdites informations de facturation (BI) audit terminal d'utilisateur final (EP) via ledit fournisseur de données de contenu (CDP').

23. Système de fourniture de données de contenu (SYS) selon la revendication 21, **caractérisé en ce que**
ledit dispositif de fourniture (OUT) est adapté pour fournir lesdites informations de facturation (BI) audit terminal d'utilisateur final (EP) via ledit opérateur de télécommunication (TO).
